# EUROPEAN PATENT SPECIFICATION

(11) **EP 0 453 562 B1**
(45) Date of publication and mention of the grant of the patent: **07.01.1999**
(21) Application number: 91901180.9
(22) Date of filing: 10.11.1990
(51) Int. Cl.: G06F 9/44, G06F 15/16, G06F 3/033

(54) **USER INTERFACE FOR MANAGEMENT**
BENUTZERSCHNITTSTELLE FÜR VERWALTUNGSSYSTEM
INTERFACE DE GESTION POUR UTILISATEUR

(30) Priority: 13.11.1989 US 436170
(43) Date of publication of application: 30.10.1991
(73) Proprietor: DIGITAL EQUIPMENT CORPORATION, Maynard, MA 01754 (US)
(72) Inventor: HARROW, Jeffrey, Rubin, Amherst, NH 03031 (US)
(74) Representative: Dubois-Chabert, Guy
(86) International application number: US9006591
(87) International publication number: WO9107719

(56) References cited:
- EP-A- 281 102
- EP-A- 295 760
- GB-A- 2 204 432
- IEEE Computer Graphics and Applications, vol. 8, no. 5, September 1988, IEEE; (New York, US),B.A. Myers: "Windo interfaces. A taxomy of window manager user interfaces", pages 65-84
- IBM Technical Disclosure Bulletin, vol. 31, no. 1, June 1988, IBM Corp., (Armonk, NY, US), "Method of multiple selection of icons on a computerdisplay by using a pointing device", pages 19-20
- IBM Technical Disclosure Bulletin, vol. 32, no. 6A, November 1989, IBM Corp., (Armonk, NY, US), "Dynamic graphical icon exchange", page 252

## Description

### Background of the Invention

The invention relates to user interfaces for performing management in computer networks.

In many technologies, large, complex tasks are performed through the cooperative or independent efforts of several components. This approach offers several advantages, in particular, portions of a task can be performed independently by the components, without relying on other components, or, a task may be cooperatively performed. This not only increases the efficiency and overall reliability with which tasks are completed, but also enhances configurability.

In computer systems, various computing components are connected into networks by communications links. These components include, in addition to the computers, servers peripheral devices, and other hardware or software. A server may, for example, store large amounts of data which may be accessed, used, and updated by a number of users in the system. A server may also control peripheral devices such as printers, or provide specialized computational services (e.g. database searching and sorting), and so forth.

Components or a system of components must be managed by either querying information from the components and/or controlling the components. Through management, the system and the individual components are configured and, where failures occur, the cause of the failures are located, and where possible, hardware or software components are dynamically reconfigured to restore operation.

In computer networks, several software and hardware tools have been developed to facilitate management. Generally, different tools may be required even for components which perform similar functions (i.e., different tools may be required to manage LAN bridges from the same or different vendors) and still other tools may be required to manage sub-components. These tools include, e.g., network management programs for groups of computers and servers, on-line computer diagnostic programs for the internal sub-components of a computer, and numerous (vendor dependent) sub-system diagnostics for sub-systems such as interface cards and circuit boards.

These diverse tools have equally diverse user interfaces, most of which are of the "command line" type. In a command line interface commands are typed in character by character and must conform to a predefined, often complex syntax. For example, the command

### TELL GENEVA SHOW CHARACTERISTICS EXECUTOR

instructs the "NCP" software tool (available from Digital Equipment Corporation, Maynard, MA) to retrieve DECnet "characteristics" data from the network node named "Geneva". As with the commands for other software tools, the length of this command makes it difficult to memorize, and increases the likelihood of typographical errors.

Commands for other software tools have similar (but not identical) syntaxes, increasing the difficulty of memorization. For example, the command
SHOW BRIDGE FLOOR_1 CHARACTERISTICS
instructs the "RBMS" software tool (available from Digital Equipment Corporation, Maynard, MA) to retrieve "characteristics" data from the LANbridge named "Floor_1". Note that the wording of this command is quite similar to the previous NCP command, even though the command syntax is different, and thus the two commands may be easily confused, even by experienced users.

When a command error does occur, present software tools typically offer little explanation of how to correct the error. For example, an error message typically consists of a phrase such as "%NCP-F-INVCMD, invalidcommand", which does not fully explain the circumstances of the error or how to recover from it.

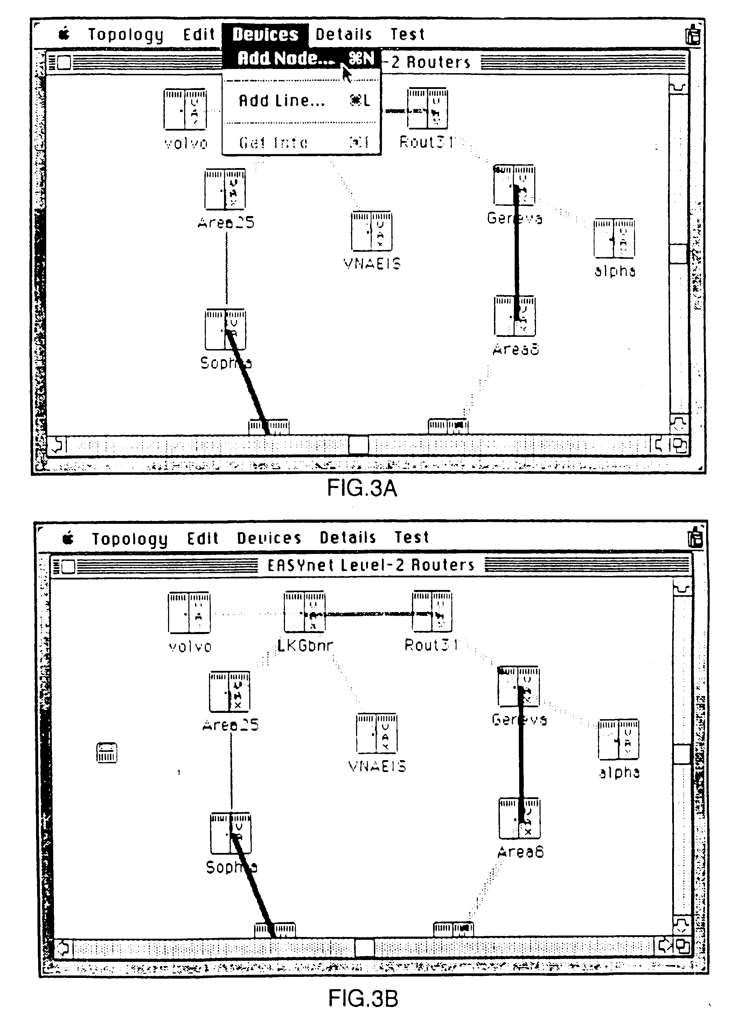

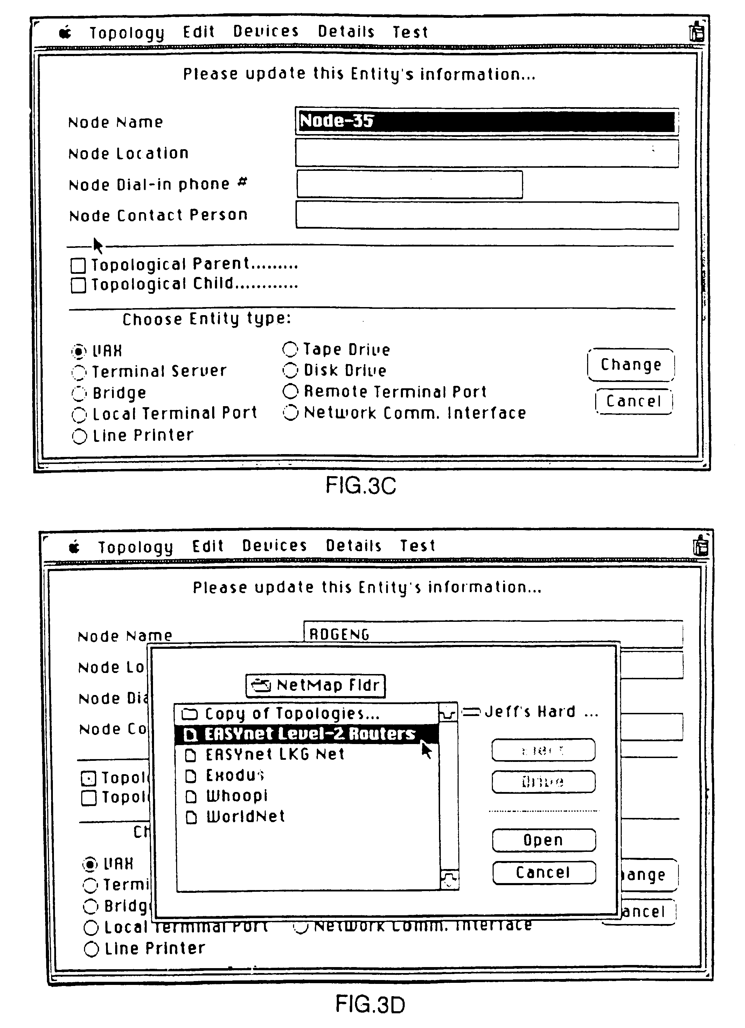

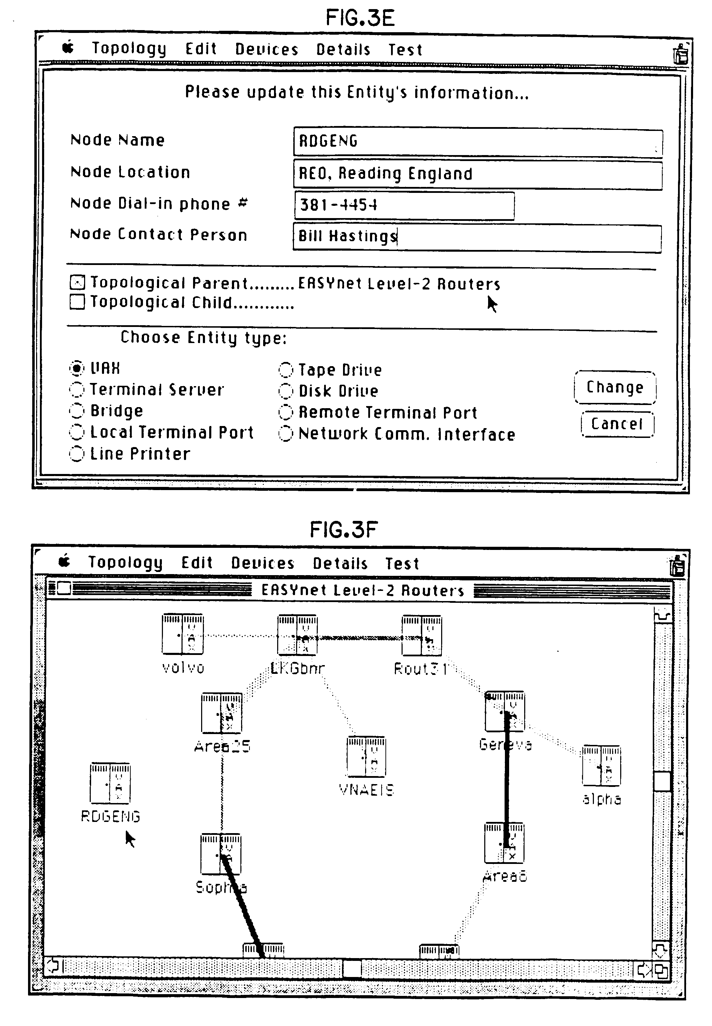

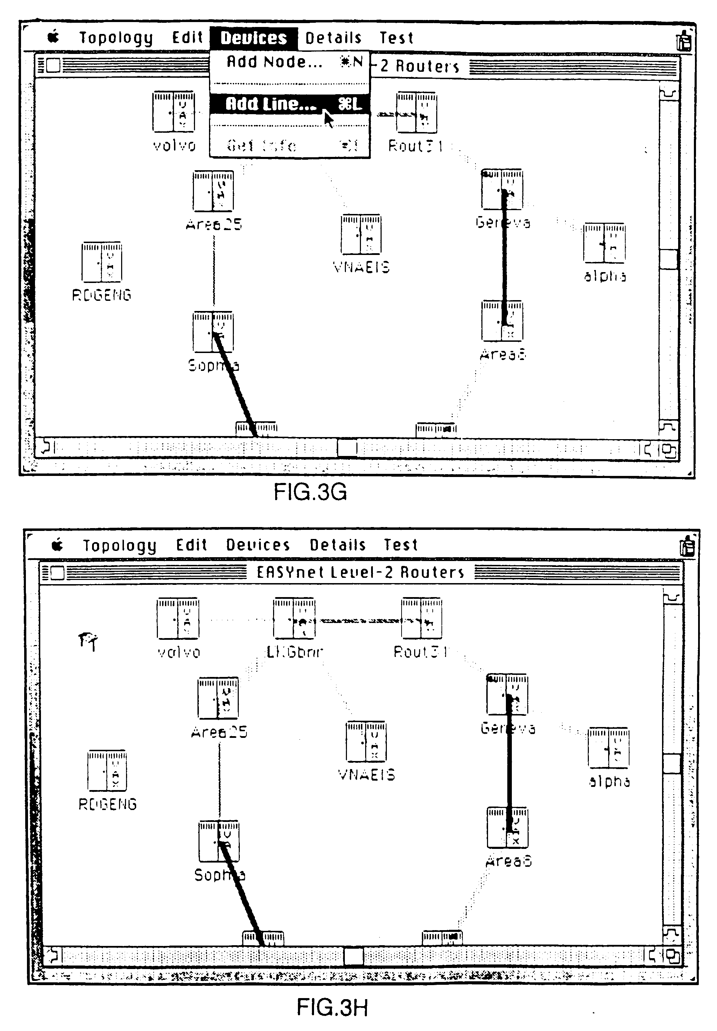

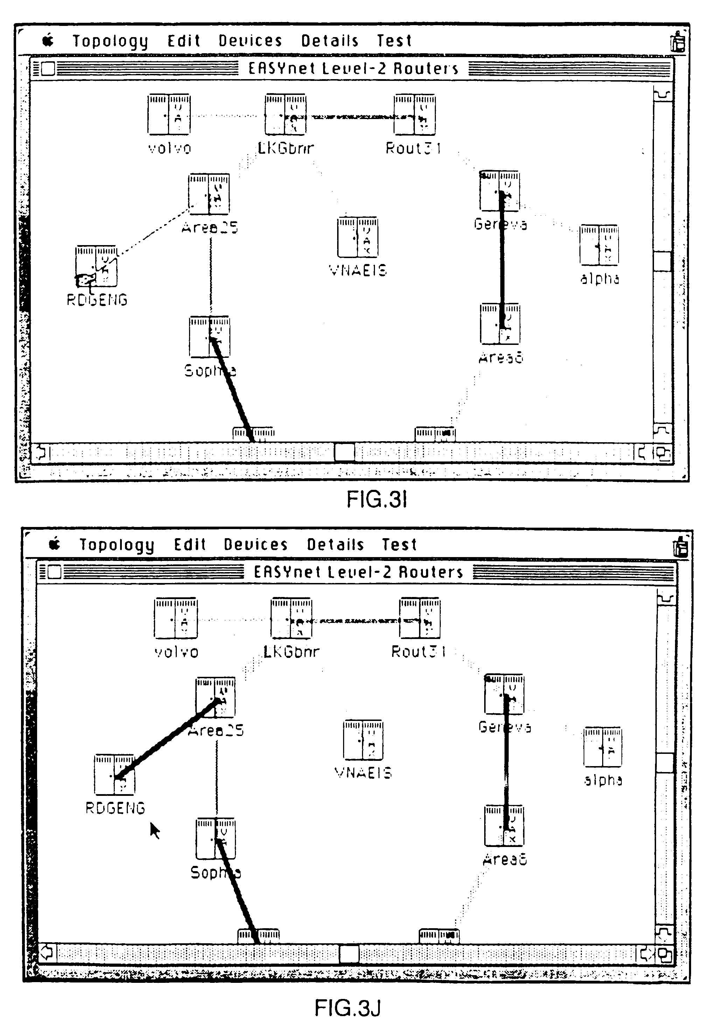

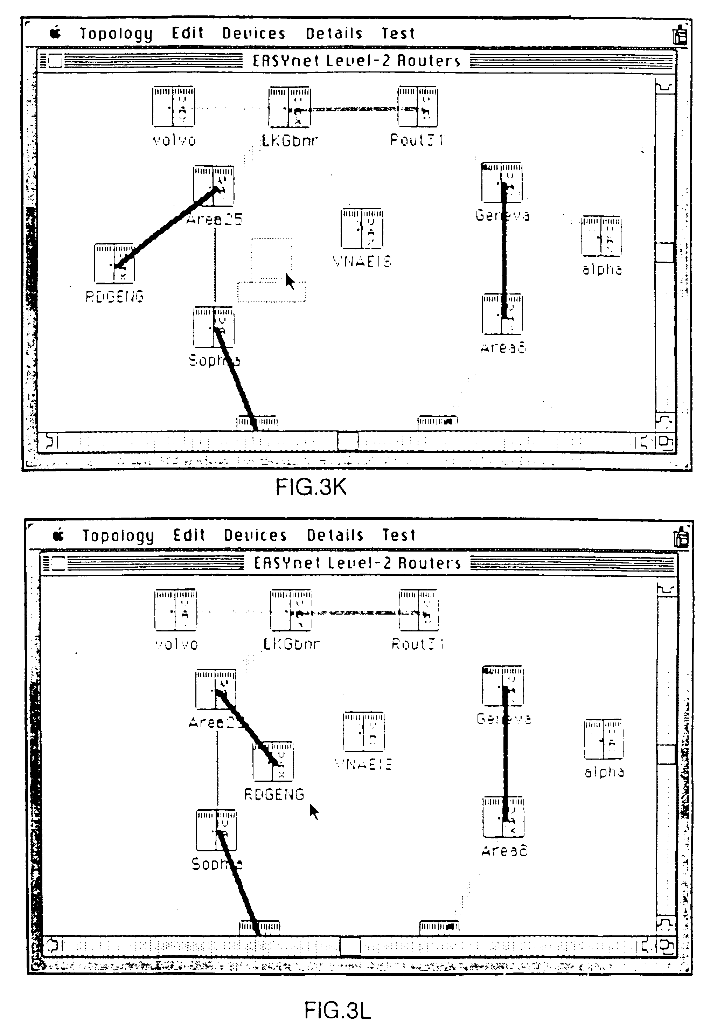

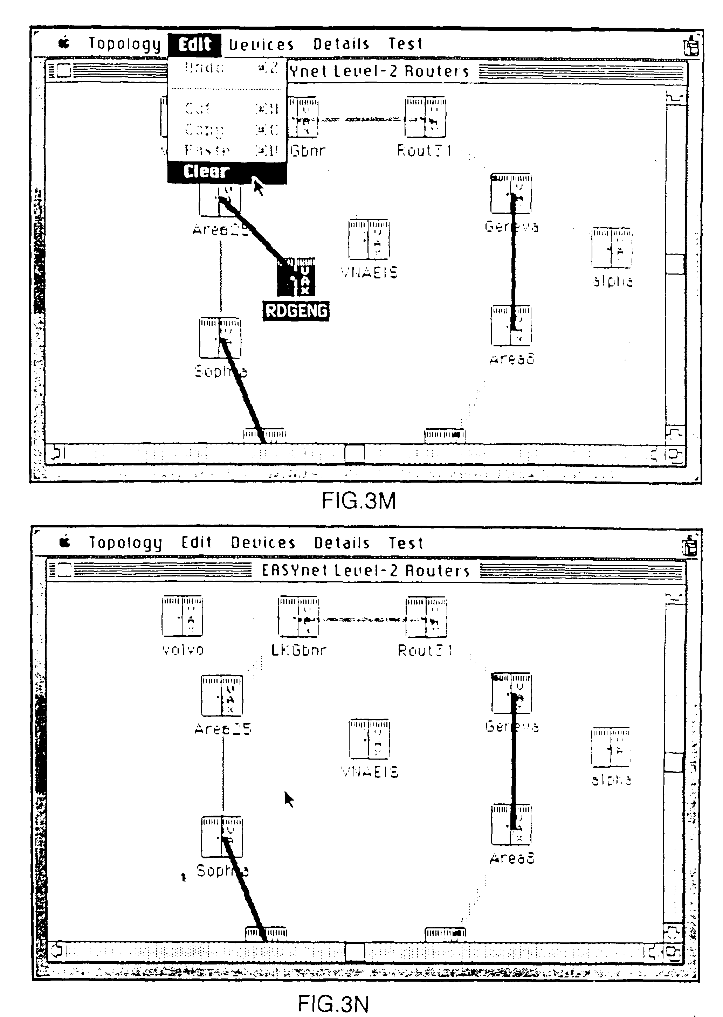

IEEE paper from the September 1988 issue of IEEE Computer and Graphics applications, 1988 (Sept.), No. 5, N.Y., USA, teaches a windows manager wherein different icons (Figure 3 of the IEEE paper) corresponding to different window managers are taught. The different windows could be the overlapping (covered) type or the non-overlapping (tiled) type. No hierarchy of the icons is taught nor envisaged.

European Patent Publication A2 0 281 102 teaches how a user can edit communication configuration parameters on a user's system. A user's system (local system) and a controlled system which is connected to the user's system are both displayed on the same screen. The object is to edit existing connected databases, using a computer program known as a configuration editor. There are no icons or entities, and no hierarchy of the entities is taught nor envisaged therein.

### Summary of the Invention

The invention, in its broad form, resides in a method of performing entity management operations in a computer network comprising entities such as computers, servers, peripheral devices, hardware, software, as generally recited in claim 1.

Preferred embodiments of this aspect include the following features.

When the intended operation is to be done on a first entity, the translating step comprises translating the command into a first directive, and when the intended operation is to be done on a second different entity, the translating step comprises translating the command into a second different directive.

A command corresponds to an entity management operation that retrieves management information from an entity.

Management information is displayed to a user in a standard format that is identical regardless of the identity of the entity. The management information comprises a summary of the management condition of the entity, configuration parameters and information from the entity, counts of management-related events from the entity, or topological information from the entity,

A command corresponds to an entity management operation that modifies the function of the entity. This command alters topological information relating to the entity.

A command corresponds to an entity management operation that causes actions to be performed by an entity. This command verifies the operation of the entity.

Commands of the set are displayed to a user as items in a menu. For a given entity, items in the menu which are irrelevant or nonsensical are made inactive.

Topological information for the system is displayed as icons on a map. The topological information is displayed as a hierarchical sequence of layers, each layer comprising a group of the entities.

The entities comprise software, or software and hardware components on a computer network. Entities not on the computer network which can be managed through the actions of the human beings. The components comprise one or more of bridges, terminal servers, computers, or modems on a network. The components may also comprise one or more of the NCP, RBMS, or DCL software tools.

The set of commands comprises a summary command, a characteristics command, a counters command, and a test command. For a DECnet component named <name>, the summary command is translated to an associated NCP directive
TELL <name> SHOW SUMMARY EXEC
the characteristics command is translated to an associated NCP directive
TELL <name> SHOW CHARACTERISTICS EXEC
and the counters command is translated to an associated NCP directive
TELL <name> SHOW EXEC COUNTERS.
For a bridge component named <name>, the summary command is translated to an associated RBMS directive
SHOW BRIDGE <name> SUMMARY
the characteristics command is translated to an associated RBMS directive
SHOW BRIDGE <name> CHARACTERISTICS
and the counters command is translated to an associated RBMS directive
SHOW BRIDGE <name> COUNTERS.
For a terminal server component named <name>, the characteristics command is translated to the associated NCP directives
CONNECT NODE <name>
SHOW SERVER CHARACTERISTICS
and the counters command is translated to the associated NCP directives
CONNECT NODE <name>
SHOW SERVER COUNTERS.
For a single node component named <name>, the test command is translated to the associated NCP directive
LOOP NODE <name>
and for two node components named <namel> and <name2>, the test command is translated to the associated NCP directive
TELL NODE <namel> LOOP NODE <name2>.

Preferred embodiments of the invention are set out in the dependent claims.

### Description of the Drawings

A more detailed understanding of the invention may be had from the following description of a preferred embodiment to be read and understood in conjunction with the accompanying drawing wherein:

Fig. 1 is a block diagram of the present invention interfacing a user's terminal to the management scheme of a computer network.

Figs. 2A through 2E illustrate a map of the network as depicted on the user's terminal.

Figs. 2F and 2G illustrate the display of multiple dimensions of information by line icons.

Figs. 2H through 2J illustrate the information available from network components.

Figs. 3A through 3N illustrate the editing of the network map as depicted on the user's terminal.

Figs. 4A through 4F illustrate the loopback testing of the network as depicted on the user's terminal.

Figs. 5A through 5J illustrate accesses to network component parameters as depicted on the user's terminal.

Figs. 6A through 6J illustrate simulated movement by the user through layers of the network as depicted on the user's terminal.

Figs. 7A through 7F illustrate accesses to component parameters at the new network layer as depicted on the user's terminal.

Figs. 8A through 8C illustrate sub-component details available for a bridge component as depicted on the user's terminal.

Figs. 9A through 9D illustrate sub-component details available for a terminal server component as depicted on the user's terminal.

Figs. 10A through 10K illustrate sub-component details available for a VAX computer component as depicted on the user's terminal.

Figs. 10L through 10N illustrate sub-component details available for a remote terminal port sub-component of a VAX computer component as depicted on the user's terminal.

Figs. 100 through 10Q illustrate sub-component details available for a disk drive sub-component of a VAX computer component as depicted on the user's terminal.

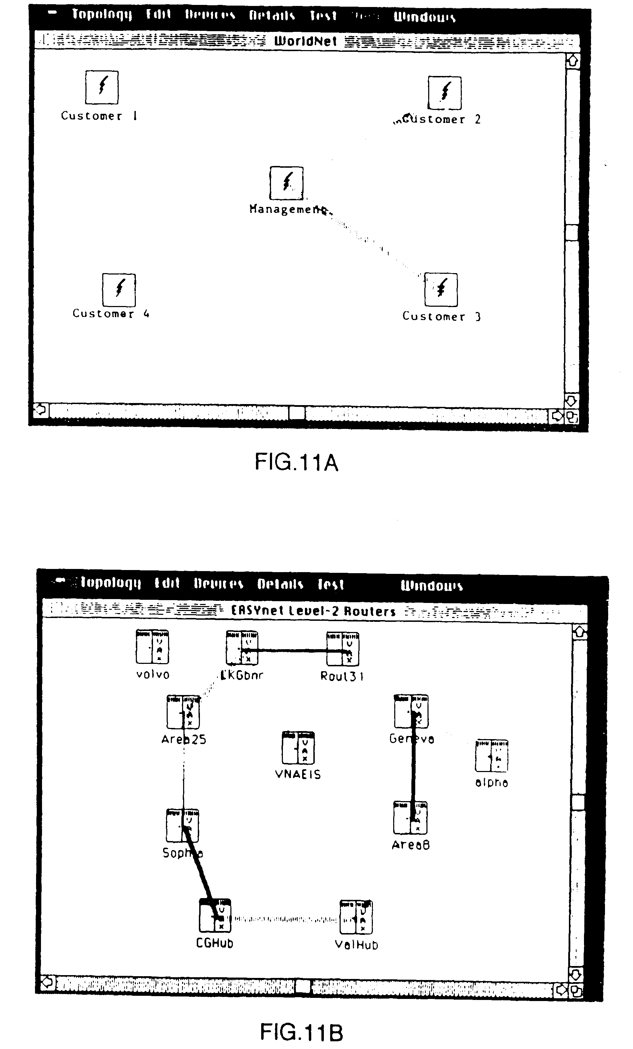

Fig. 11A illustrates a political topological map.

Figs. 11B through 11D illustrate the topological maps of previous figures.

Fig. 11E illustrates a message box not illustrated in the previous figures.

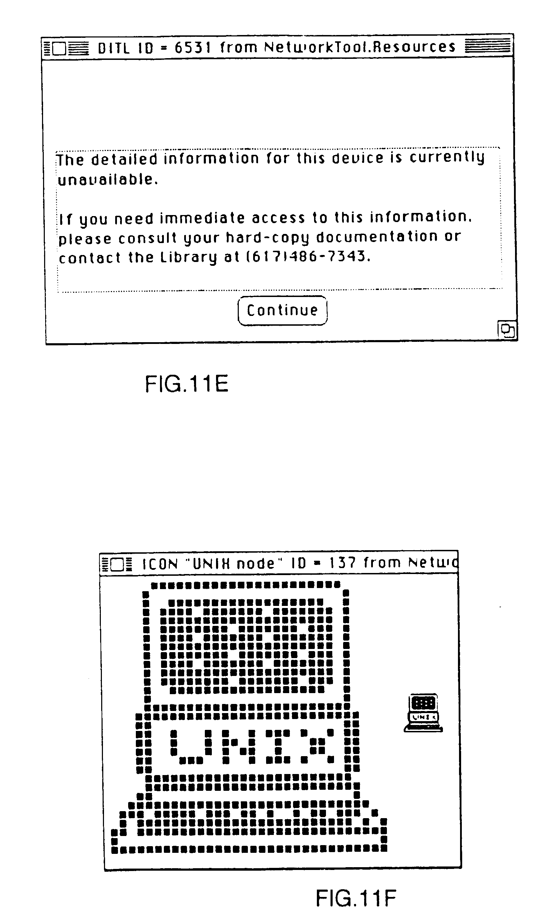

Figs. 11F through 11I illustrate the details of the icons, and the process of creating these icons.

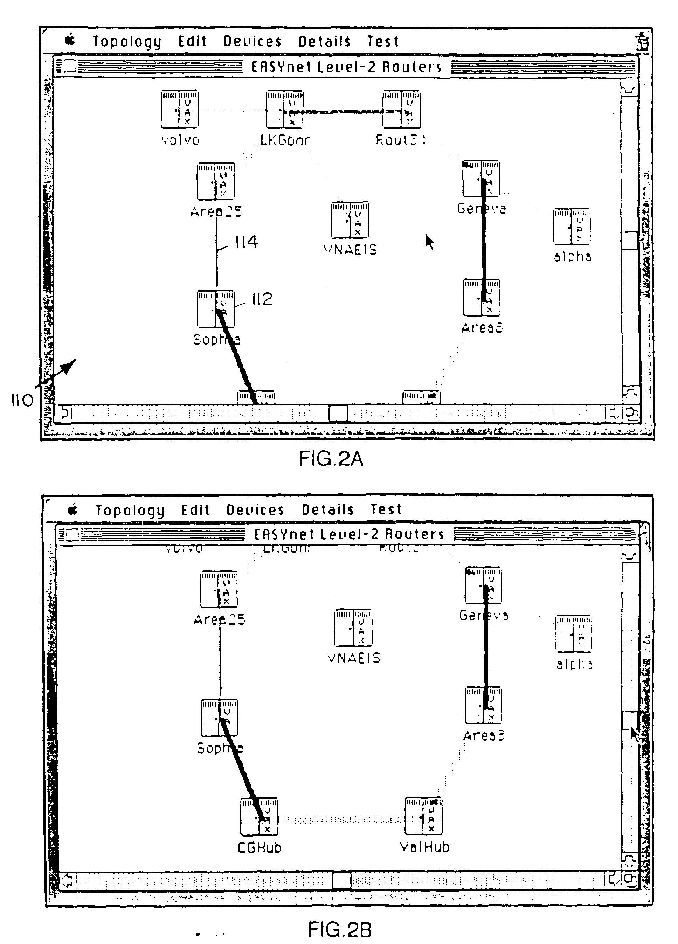

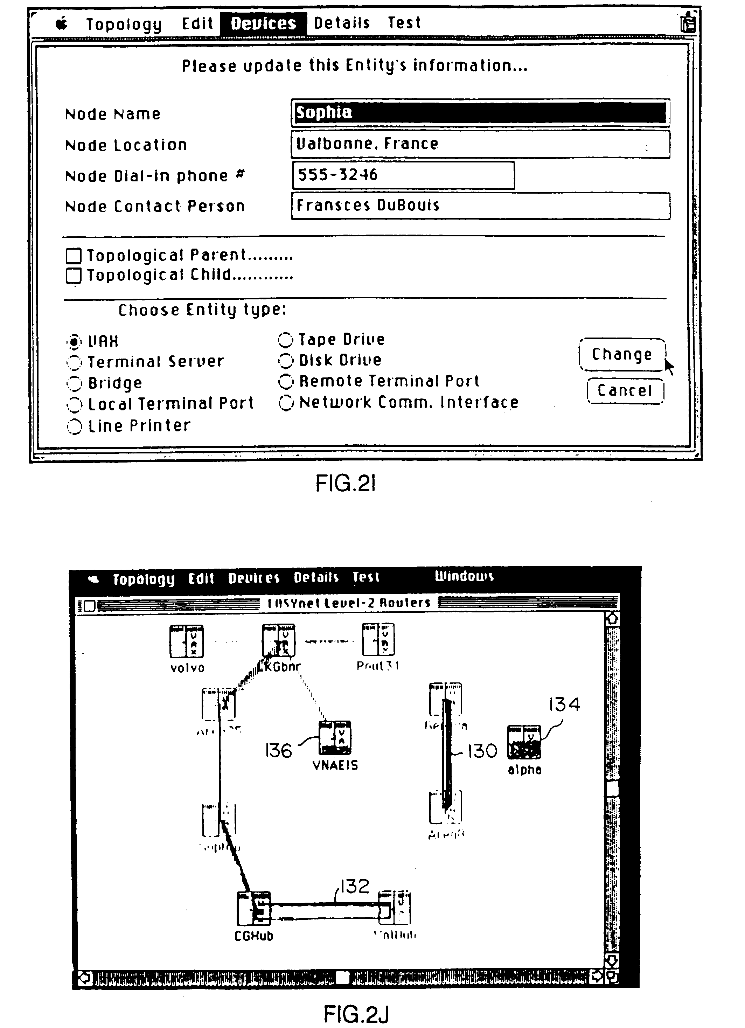

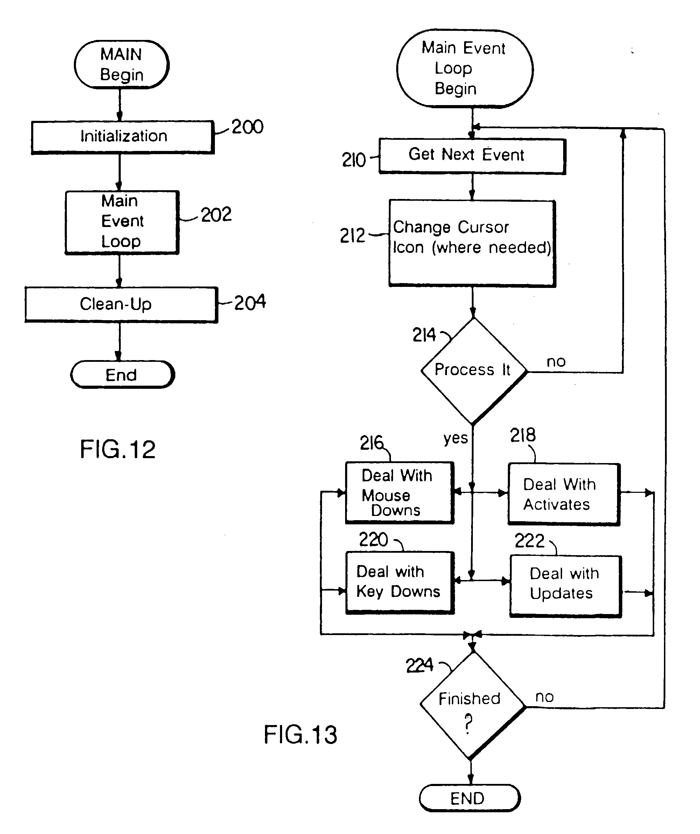

Fig. 12 is a flow chart of a program implementing the user interface of Figs. 2A through 11D.

Fig. 13 is a flow chart of the main event loop of the program of Fig. 12.

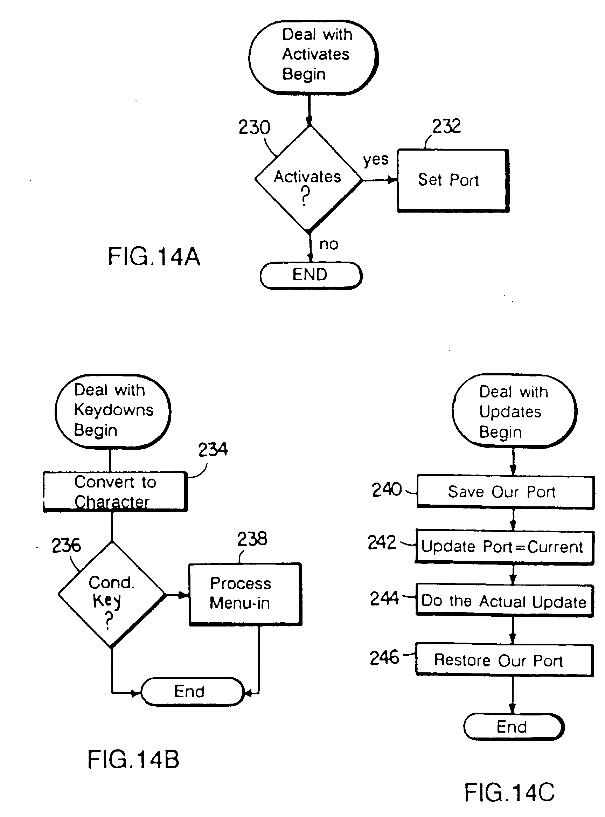

Figs. 14A through 14D are flow charts of the routines called by the main event loop of Fig. 13.

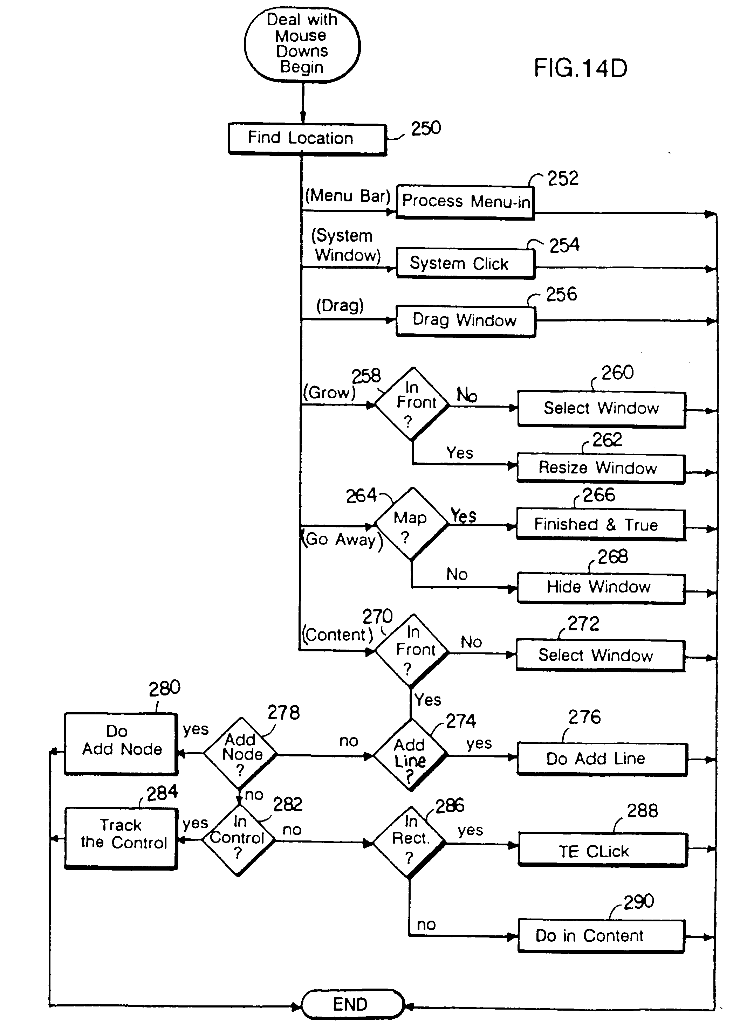

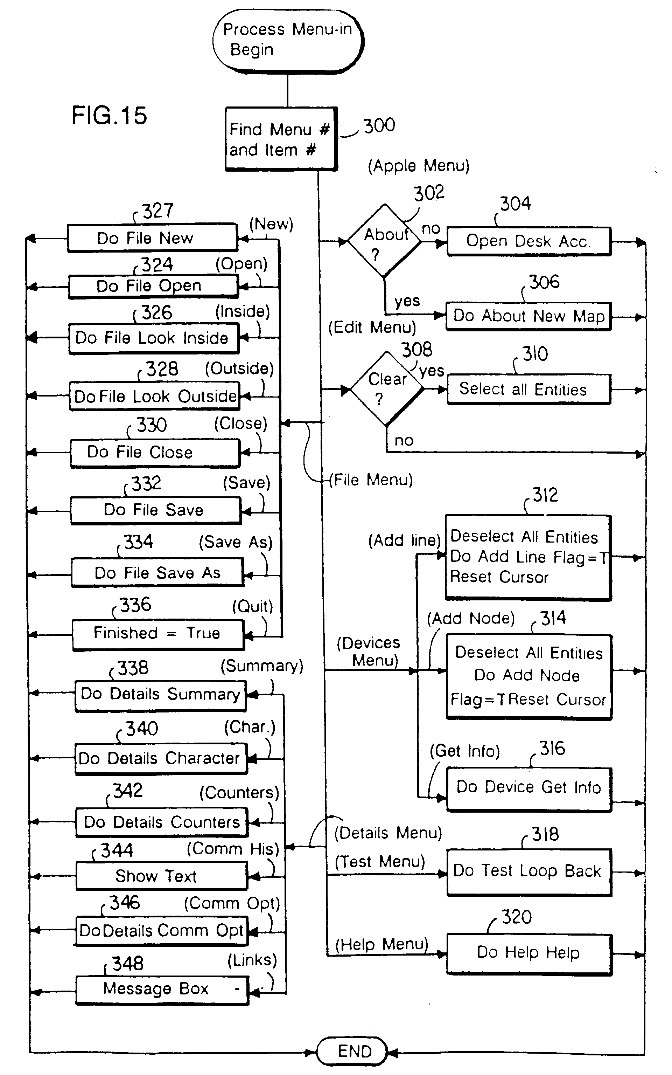

Fig. 15 is a flow chart of the menu processing routine called by the routines of Fig. 14B and 14D.

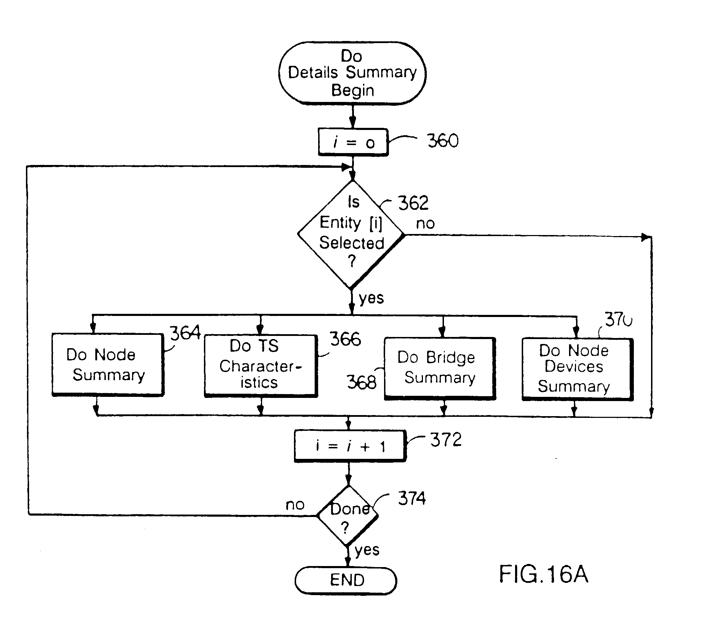

Figs. 16A through 16D are flow charts of the routines called by the menu processing routine of Fig. 15.

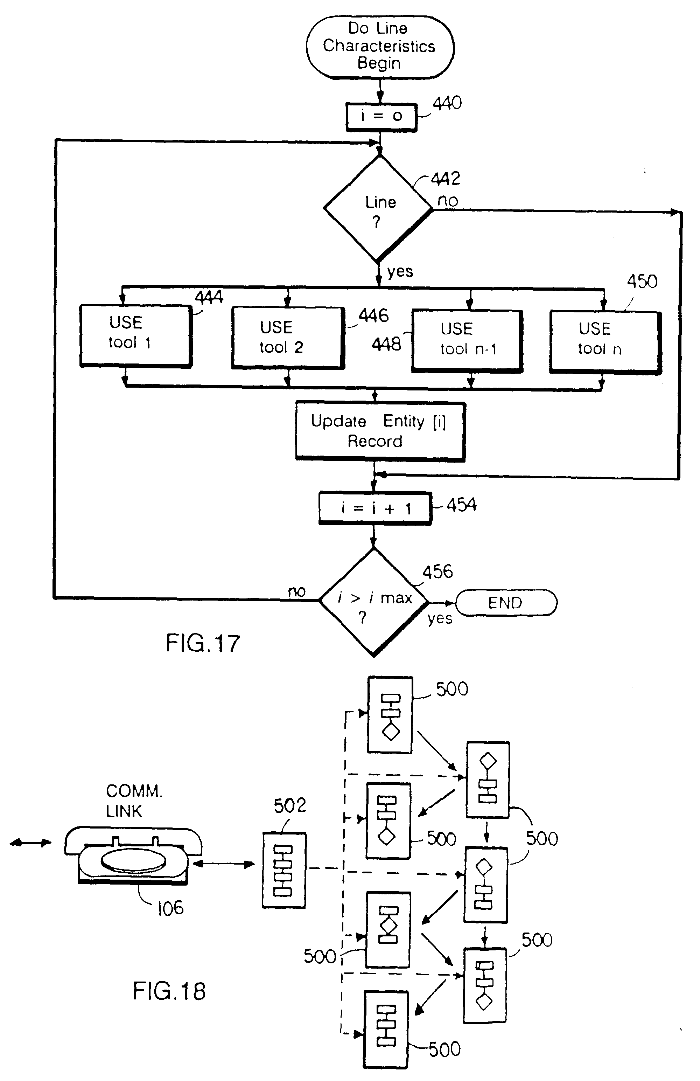

Fig. 17 illustrates the gathering of link information to update the visual appearance of line icons.

Fig. 18 illustrates the management of configurable software.

### Description of Preferred Embodiment

The invention provides a graphic, interactive user interface that significantly reduces the effort and training required to perform management of computer networks. Because it is intuitive and visually oriented, this interface makes it easy for managers and technicians responsible for any level of a computer network environment (from, e.g., a world-wide network through the circuit boards and components that make up individual computers) to visualize and work with the network components. These characteristics also make the interface applicable to the management of components or systems other than computer components or computer networks, such as the modules of a large software program.

In one embodiment, the interface is produced by a computer program running on suitable hardware such as an Apple Macintosh^{R} computer, a VAX^{R} computer workstation (e.g., running DECwindows), or a Sun^{R} workstation. The program may not itself provide management functionality, rather, this may be obtained from various other network management tools through "behind-the-scenes" interaction with a network server (the program is connected to the network of interest via terminal emulation or any other protocol). In one possible mode of operation, user commands could be received via the user interface, the commands translated to the proper form (e.g., into command-line directives) for the appropriate on-line management tool and transmitted to the tool, then, response data may be received from the tool, formatted (in the form described below), and then displayed to the user.

Thus the invention provides access to diverse management functions and allows the user to view these functions in a consistent fashion through a single easy-to-learn user interface. As discussed below, to aid this process, the commands made available through the interface could be context sensitive. In addition, help information could be supplied in a context sensitive fashion.

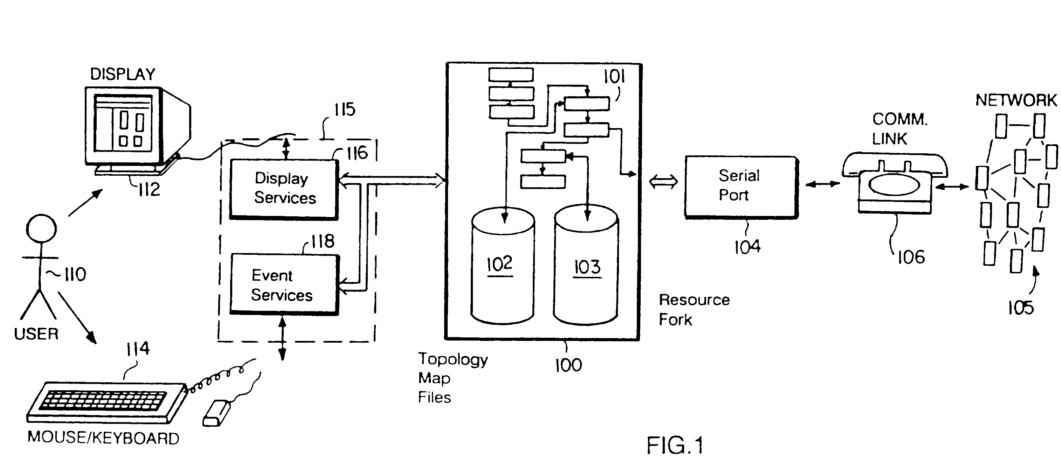

Referring to Fig. 1, a computer program 100 running on an Apple Macintosh^{R} computer includes a sequence of executable steps 101 which perform computations and interact with topology map files 102, each of which stores a mathematical model of a topology map (see Figs. 2A through 11E) along with entity information relating to the entities therein (e.g., components, sub-components, as well as communications links). The resource fork 103 of the application file contains mathematical descriptions of the dialog boxes, alert boxes, node and cursor icons, menu structures, pictorial representations of detailed information (e.g., block diagrams and schematics for components), and other visual and program information and code. Topology map files 102 need not be stored directly on the workstation that is providing the user interface, rather, it could be accessible from a network server.

The word "entity" is used here and in the description that follows to generically indicate any of the objects which may require management. Thus, in a computer network, a hardware component such as a computer or server is an "entity", a communications link is an "entity", and any other manageable objects, such as groups of other entities, or sub-components and sub-components of sub-components ..., and configurable software modules and sub-modules ..., are "entities".

It is important to understand that all software (for example, an NCP program on a VAX computer, or the invention itself), hardware, or other forms which may perform management tasks or act as intermediaries in the performance of management tasks are entities themselves, and as such are subject to management in an identical manner. Thus the invention is a general interface for issuing directives to entities (which may be hardware, software, or other forms) in a consistent and easy-to-learn manner.

The word "topology" is used here and in the description that follows to generically indicate any relationships between entities that may be displayed by the invention. These topologies may reflect, for example, physical, logical, or political relationships between the entities. Thus, in a computer network, a topology may include a set of hardware components which are part of a single political organization, are physically located together, or logically related (e.g., having the same type).

In one embodiment, program 100 interacts with, for example, a serial port 104 to issue management commands to a computer network 105 via a communications link 106 (for example, a telephone line). Additionally, the program 100 displays information to a user 110 via a graphical display 112, and receives commands from the user 110 via a pointing device (e.g., mouse) and keyboard 114. The operation of the program is supplemented by operating system support routines 115, comprising display services 116 and event services 118 that support the interactions between program 100 and the display 112 and mouse and keyboard 114. (For a thorough discussion of the event and display support, see "Inside Macintosh", Vols. 1-5, Addison-Wesley Publishing Company.)

Figs. 2A through 11E illustrate the basic presentation screens generated by program 100 and the user's interaction therewith. However, program 100 is somewhat dynamic in that the user can configure the program to appear differently, based upon the structure of the particular network or component being managed. Therefore, while the basic structure and capabilities remain the same, the details of the network maps, numbers of such maps, detailed depictions of schematics and similar documents, etc. can change based upon the network and components.

It should also be noted that while the displays in these figures represent a sequence of operations (e.g., moving through topologies, gathering information from entities, etc.) that are performed by a hypothetical user, this sequence is merely exemplary, and the operations that would be performed by an actual user in management of a real network can be chosen in real time at the user's discretion.

### Initial Display, Menus, Cursor

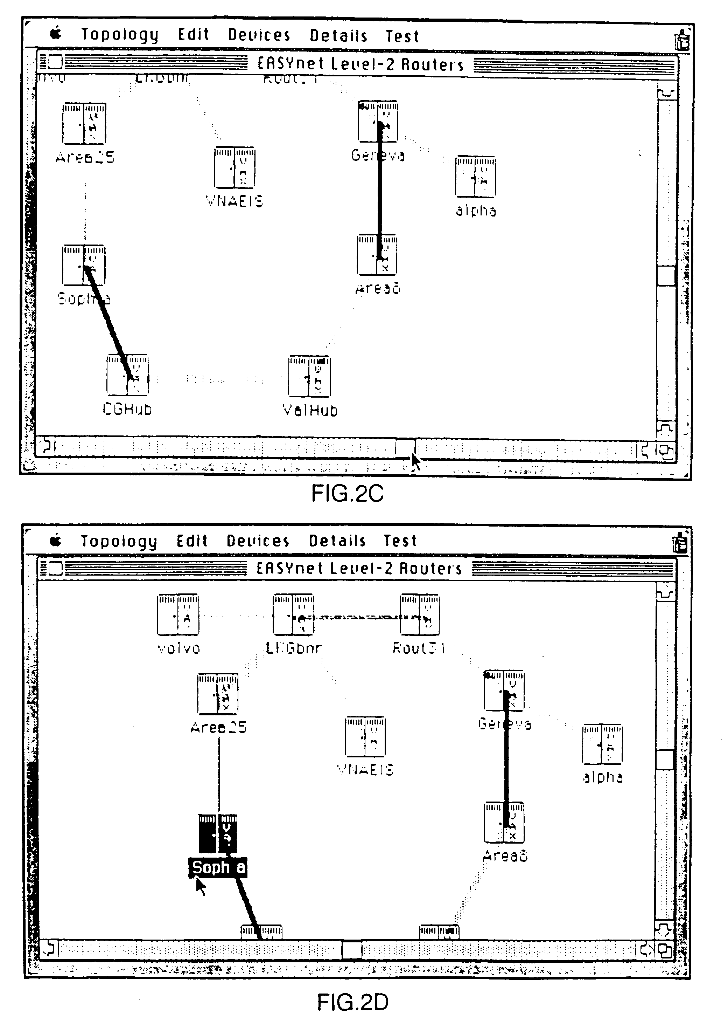

Referring to Fig. 2A, an initial display may be a world-wide network map 110 showing computer nodes 112 interconnected by communications links 114. Each node icon has a legend which provides a name for the component represented by the icon (VAX computers in Fig. 2A). A map may be larger than the screen, and can be moved around "under" the screen by using the scroll bars on the right and bottom sides of the screen. The box within the scroll bar represents the relative position of the screen on the larger, underlying map. Referring to Fig. 2B, by using the cursor (the arrow on the screen, which is moved by the user by means of the mouse or other pointing device) and "grabbing" the box in the vertical scroll bar (on the right side of the screen), the window can be slid down over the underlying map to reveal more of the bottom section of the map. Referring to Fig. 2C, by using the cursor and "grabbing" the box in the horizontal scroll bar (on the bottom edge of the screen) the window can be slid right over the underlying map to reveal more of the right side of the map.

Any entity represented on the screen can be "selected" by moving the cursor onto the icon representing that entity and clicking the mouse button. Referring to Fig. 2D, the node "Sophia" has been selected, and it's icon inverts its image (in color screens, the colors complement, e.g., green substitutes for red; in black and white screens, as in Fig. 2D, black changes to white and white changes to black).

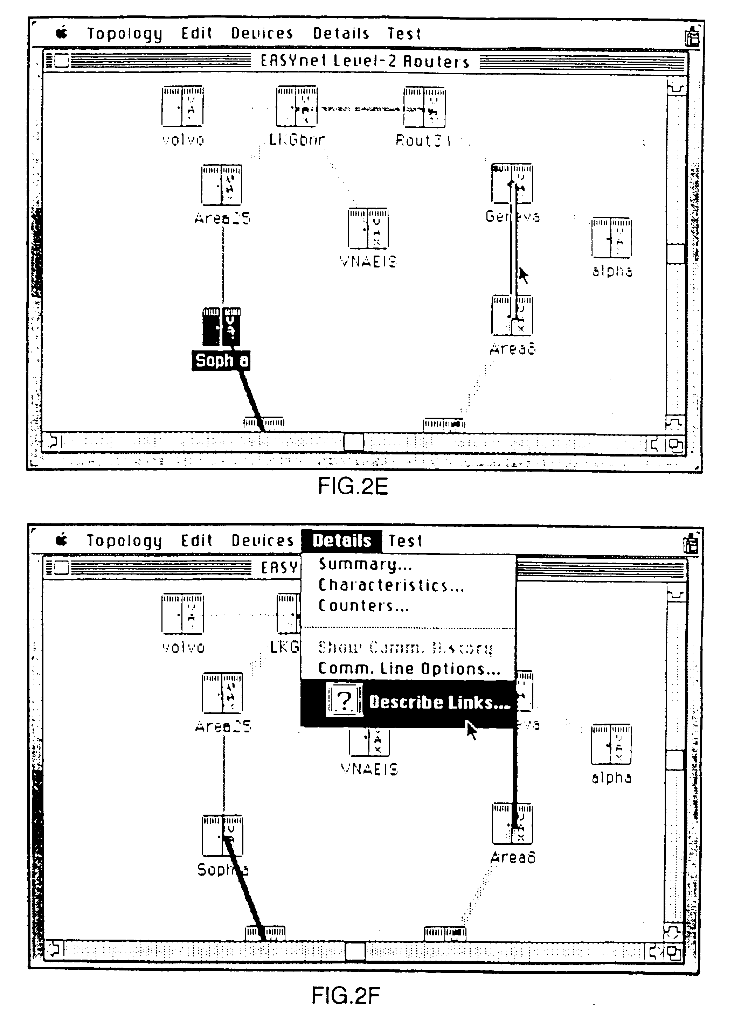

Not only nodes, but communications links can be "selected" as well. Referring to Fig. 2E, the link between nodes "Geneva" and "Area8" has been selected as well as the node Sophia. When selected, the link's icon, like a node's icon, presents a unique "selected" indication (compare it with its deselected representation in Fig. 2D).

Note that any number and mix of entities can be selected at one time (in Fig. 2E both the node "Sophia" and the "Geneva" to "Area8" communications link are "selected" at the same time.)

Each click on an icon alternatively selects or deselects the entity represented by that icon, while a click outside of an icon deselects all currently selected entities. In other embodiments, any selected entities could be automatically de-selected when a subsequent entity is selected or the mouse button clicked while the cursor is over a "blank" area of the map. To select multiple entities, the "Shift" key would be held down while selecting subsequent entities; preventing the de-selection of previously selected entities.

The user interacts with the network primarily through a series of pull-down, context sensitive menus. The symbols and words across the top of the screen (the "menu bar"), represent the title, or header, of a window shade-like pull down menu, which is made visible (pulled down) by positioning the cursor within the menu title and holding down the mouse button. For example, in Fig. 2F, the "Details" menu has been pulled down. As the cursor is moved through the menu, the item which will be chosen if the user releases the mouse button at a given time is "highlighted" (inverted.) In Fig. 2F, the "Describe Links" menu item within the "Details" menu will be chosen if the user releases the mouse button.

In some cases, items on a menu (or entire menus) are inappropriate for a given situation, and are made "inactive". While inactive, the items are displayed in gray, rather than black (on a color screen an inactive item is shown in a lighter shade of its color). A user is unable to "highlight" an inactive menu or menu item, and so cannot choose it (in the embodiment of the invention coded in microfiche Appendix B, entire menus are not inactivated). In Fig. 2F, the "Show Comm. History" menu item is inactive and will not highlight when the cursor is moved onto it, nor will it be chosen should the user release the mouse button while the cursor is over that inactive menu item.

In further enhancements, both menu titles and the items within the menus would be context-sensitive. This means that, depending on the state of the network and what entities are currently "selected", the menu titles, and the items within those menus could change as appropriate to the situation.

This mechanism thus prevents users from making errors before they occur, rather than merely advising them that they have made an error.

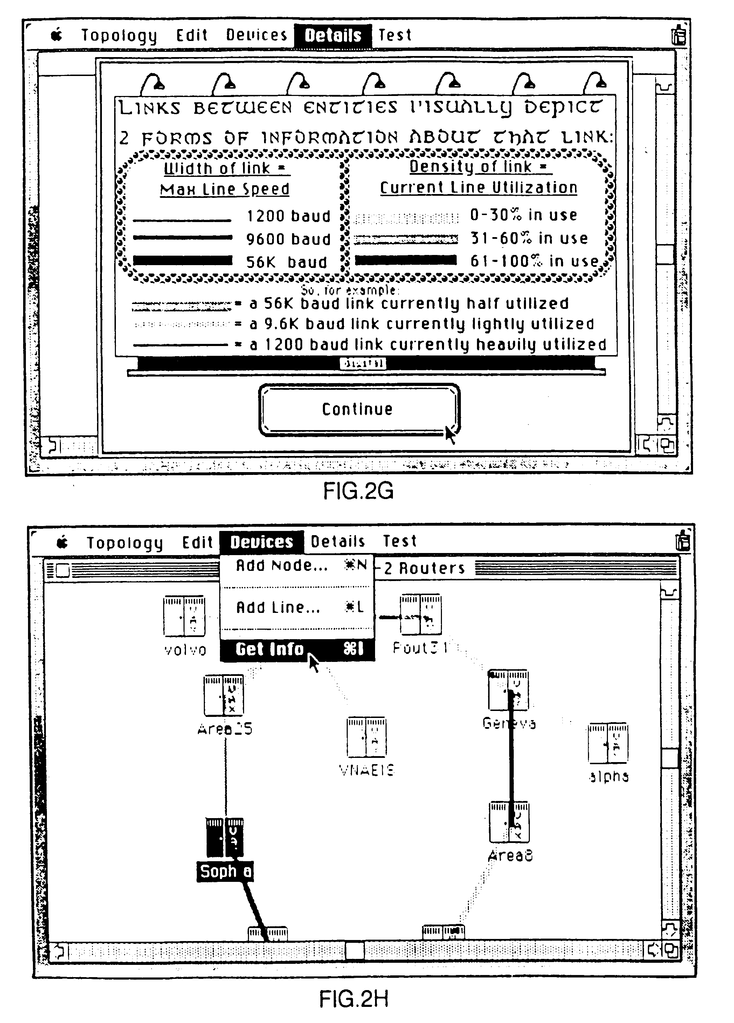

Referring to Fig. 2G, the user has released the mouse button on the "Describe Links" menu item in the "Details" menu. The result is a "dialog box" that indicates how the communications links are represented on the screen.

The "help" screen of Fig. 2G illustrates the use of graphics, as well as text, to provide the user with easy to understand assistance. This help screen is always relevant to the current situation because a map of some sort is always displayed. In an enhancement of this help feature, a context sensitive "help" menu would be provided (see e.g. Figs. 11A through 11D).

Also illustrated in Fig. 2G is on-screen "buttons", in this case, the rectangle containing the word "Continue". Buttons have a distinctive shape and contain descriptive text. Positioning the cursor within a button (using the mouse), and clicking the mouse button, will cause the button's action to take effect. The default, or safest button (if there is more than one button on the screen) will be outlined with a heavy line (as is the "Continue" button). As a shortcut, pressing the "Return" key on the keyboard will cause the default button to be "pushed" regardless of cursor position.

Fig. 2G also describes (in black and white) two of the dimensions in which communications links are iconically depicted: The width of the link's icon indicates the link's speed (i.e., baud rate), and the color brightness of the link's icon (on a black and white screen, the grey scale) indicates how much of that link's potential data communications capacity is currently utilized. These features make it very easy for a user to determine where and why communications bottlenecks are occurring.

Fig. 11B is a color version of Fig. 2A (on a smaller scale), that illustrates the above two dimensions, and also illustrates a third dimension: the color hue of the link indicates its "health" (e.g., error rate).

In Fig. 11B, it can be noted that the line icons utilize both size (their thickness) as well as color brightness and color hue to convey management information. Although node icons are utilizing the color hue and their graphic representation to convey management information, in another embodiment, node and other types of icons could also use color brightness and size along with color hue and graphic representation to convey additional management information. For example, the size of a node icon could indicate its computing capacity and the color brightness of the node icon could indicate it percent use of that capacity at a given time.

Referring to Fig. 2H, the user has "pushed" the "Continue" button and returned to the main display. At this point the node "Sophia" is still selected. Without deselecting "Sophia", the user has pulled down the "Devices" menu and has chosen the "Get Info" activity. This will cause information on "Sophia" to be displayed. Similarly, most activities are initiated by the user "selecting" one or more entities (the node "Sophia" in this example) and then choosing an appropriate menu item ("Get Info" from the "Devices" menu in this example).

If more than one entity is chosen and the activity does not require more than one entity, the activity will be serially conducted for each of the selected entities.

Referring to Fig. 2I, the result of choosing the "Get Info" item from the "Devices" menu is to display a dialog box filled in with information about the selected entity (the node "Sophia" in this example.)

Information within rectangular-outlined text fields can be modified by moving the cursor into the area and clicking, then using the keyboard to add or change the text.

Clicking on one of the small square boxes in the center section causes another temporary dialog box to appear, allowing the user to define the topological parent (or child) for this entity (see the process of adding a node illustrated in Figs. 3A through 3N).

The series of items at the bottom of the dialog box, each next to a small circle, are called "radio buttons." Similar to a car radio's channel buttons, only one may be chosen (note that the circle next to the "VAX" button has a dark center); choosing another radio button, say the one labeled "Line Printer" by clicking on its circle or over its label, would automatically revoke the "VAX" button and choose the "Line Printer" button.

Referring to Fig. 2J, in another embodiment communications links can be represented by line icons that are hollow "pipes", in which case the width of the hollow pipe indicates the capacity of the represented link, and the hollow pipe is filled in along its length in relation to the percentage of that capacity which is being used at a given time. For example, line icon 130 represents a medium capacity communications link that has approximately 70% of that capacity currently in use, and line icon 132 represents a larger capacity communications link that has approximately 10% of that capacity currently in use.

As also shown in Fig. 2J, non-line icons such as node icons 134, 136 can provide a graphical representation of the percentage of the functional capacity of the represented entity that is currently in use. This information is represented as a bar-graph which fills in the icon with a region of different color hue (that does not obscure the graphic representation of the icon). The filling of the icon does not need to be horizontal as indicated in Fig. 2J; it may be in a vertical or any other orientation.

These embodiments allow color brightness to be used to represent yet another dimension of management information.

### Editing Topologies

### Adding Nodes

To add a node (entity) to any topology, the user chooses the "Add Node" menu item from the "Devices" menu as shown in Fig. 3A. Referring to Fig. 3B, this changes the cursor to depict a small "node", or computer, as can be seen at the left side of the screen. This type of feedback keeps a user from becoming confused as to any so-called "modal" situations where the function of the cursor and mouse have changed. In this case, clicking the mouse button will "drop" a new node onto the map.

Referring to Fig. 3C, once the user clicked the mouse button (which had been "loaded" with the "node cursor"), a "dialog box" is presented requesting information about the thus-created entity. The user will point and click at each of the rectangular text areas, changing or filling in information as necessary. Once these fields are complete, the user may define the "Topological Parent" for this entity (i.e., the topology "above" the one displayed, which would be displayed if the user chose the "Look Outside" item from the "Topology" menu) by clicking within the square ("Check Box") to the left of the "Topological Parent....." label.

The information created in this fashion, and other information about the entities in a topology, is stored in the topology map files 103 (Fig. 1). As will be fully seen later, these files are frequently accessed by the program to provide additional information (when relevant) about an entity.

Referring to Fig. 3D, the result of a click in the small, square "check box" labeled "Topological Parent..." or "Topological Child..." (as shown in Fig. 3C) is a new dialog box. In this box, the user designates which of the previously defined topologies is the "parent" (or child, had the other check box been clicked) of the selected entity by either double-clicking (two quick mouse button clicks) directly on the desired choice, or highlighting the desired choice with a single click and then clicking on the "Open" button to the right. Here, "EASYnet Level-2 Routers" is chosen. As mentioned before, the topologies are stored in topology map files 102 (Fig. 1). Thus, in this embodiment, the menu of choices provided is actually a list of the topology map files available to the program.

An aspect of the invention which Fig. 3D illustrates is that, wherever possible, the user is offered a choice of the valid options rather than being forced to remember the options. Additionally, because the user "chooses" one of a set of items, rather than typing a response, the user can not inadvertently choose an item which doesn't exist or make a typographic error. This prevents the user from making errors.

Referring to Fig. 3E, the user has designated that the "EASYnet Level-2 Routers" is the topological parent of "RDGENG", and the choice has automatically been filled in next to the "Topological Parent..." check box. Again, note the user was never able to make an error in this choice.

Should the user wish to change the choice, a click on the check box will again bring up the dialog box as shown in the previous screen.

Although "RDGENG" is a VAX computer (the default "Entity Type" indicated by the highlighted "radio button" in the bottom section of the screen), the user could click on any of the other supported entity types, which would automatically un-highlight the "VAX" radio button while highlighting the chosen one. The icon which will be subsequently displayed for this entity, as well as how the subsequently described information and testing operations will be conducted, are all automatically set by this one choice.

Where many different entity types are available, it may be more convenient to provide the user with a list box that can be scrolled. Each entry in the list box would include the icon for the entity type along with a textual description of the entity type. The user would choose an entity type (e.g., in similar fashion to that shown in Fig. 3D), but would also be able to see the icons for the available entity types to the left of the associated textual descriptions.

Once the entity information dialog box has been filled in to the user's satisfaction, clicking on the "Change" button will associate the information with the new entity. Clicking on the "Cancel" button will cause all actions taken while within this dialog box to be ignored; no changes will have taken place and the "Add Node" operation will be cancelled.

Referring to Fig. 3F, in this case, the user clicked on the "Change" button creating a new VAX computer node. The newly defined node's icon, "RDGENG", now appears on the left side of the map (the location where the user originally clicked the "loaded" node icon.)

### Adding Lines

Referring to Fig. 3G, the user is now prepared to add a communications line between the newly displayed icon for "RDGENG" and "Area25". To accomplish this the user chooses the "Add Line..." item from the "Devices" menu. Referring to Fig. 3H, the cursor is then "loaded" with an icon representing a set of "telephone poles" (visible in the upper-left corner) to alert the user that he has entered a "modal" state. The next click will begin the operation of adding a communications line between entities.

Referring to Fig. 3I, to add the communications line between the "Area25" and "RDGENG" icons, the user clicks the "telephone pole" cursor on top of one of the two icons ("Area25" in this case) and, while continuing to hold the mouse button depressed, "drags" the cursor until it is on top of the destination icon ("RDGENG" in this case.) During the drag, a "ghost" line dynamically follows the cursor from the origination node, providing constant feedback to the user.

Referring to Fig. 3J, once the user releases the mouse button from the "drag", the communications line between "Area25" and "RDGENG" is successfully added and displays capacity, health, and traffic information between the nodes (the health information is not visible on the black and white figure). If the "drag" did not start and end on top of nodes, no communications line would be added.

Referring to Fig. 3K, entities on the map can be easily moved at the user's discretion. To move an entity the user clicks within an icon ("RDGENG" in this case) and, while keeping the mouse button depressed, drags the icon to the desired destination. A "ghost" image of the icon follows the cursor as it is dragged to provide constant feedback to the user. Should the user attempt to drag the icon beyond the boundaries of the current window (i.e. to a part of the map not currently displayed), then when the "dragged" icon touches a window boundary the map will automatically scroll beneath the window, bringing more of the map into view. This automatic map scrolling will occur in any direction, including diagonally.

Referring to Fig. 3L, when the user releases the mouse button, the icon moves from its original location to the new location. This is done by an animated motion across the screen (not shown), which provides consistent visual feedback of the operation. Any connecting communications lines automatically realign themselves between the new position of the icon and their other attachment points. Here, "RDGENG" has been moved to the right of its previous position.

### Removing Entities

Referring to Fig. 3M, entities (i.e., components, sub-components, or groups of components, represented by icons, as well as communications lines) may be removed from the map at any time. To accomplish this the user selects one or more entities on the map ("RDGENG" is selected, above) and chooses the "Clear" menu item from the "Edit" menu. As seen in Fig. 3N, this removes the entity from the map. As also shown, if a node icon is selected for removal, any communications lines attached to that icon will also be removed.

The map of the network as it appears on the screen might correspond to the physical interrelationships of its components (the physical topology). That is, the links between nodes might be the same as the links in the physical network. With knowledge of the physical topology, the manager would be able to, e.g., determine the possible paths that a message could have followed from a source node to a destination node. If the transmission of the message is faulty, this may indicate a fault in one of the entities along the transmission path.

The map of the network may also, at the user's discretion, represent logical, political, or any other structure that the user finds intuitive or useful.

Some computer network architectures (such as DECnet Phase IV) do not provide topological information to the user. Therefore, while using the invention, a manager would edit a topology map to keep it consistent with the physical (or other) topology of the network. Although this would determine which nodes in the network are connected by which links, the placement of the nodes on the map would still be arbitrary. The manager could set the placement of the nodes in a manner which is intuitive to him or her. If topological information were provided, it could be used directly to generate node and link information, and the link connections. However, it would still be important to allow the manager to move entities around the map, so that the overall appearance of the map can be made intuitive for the manager.

### Testing

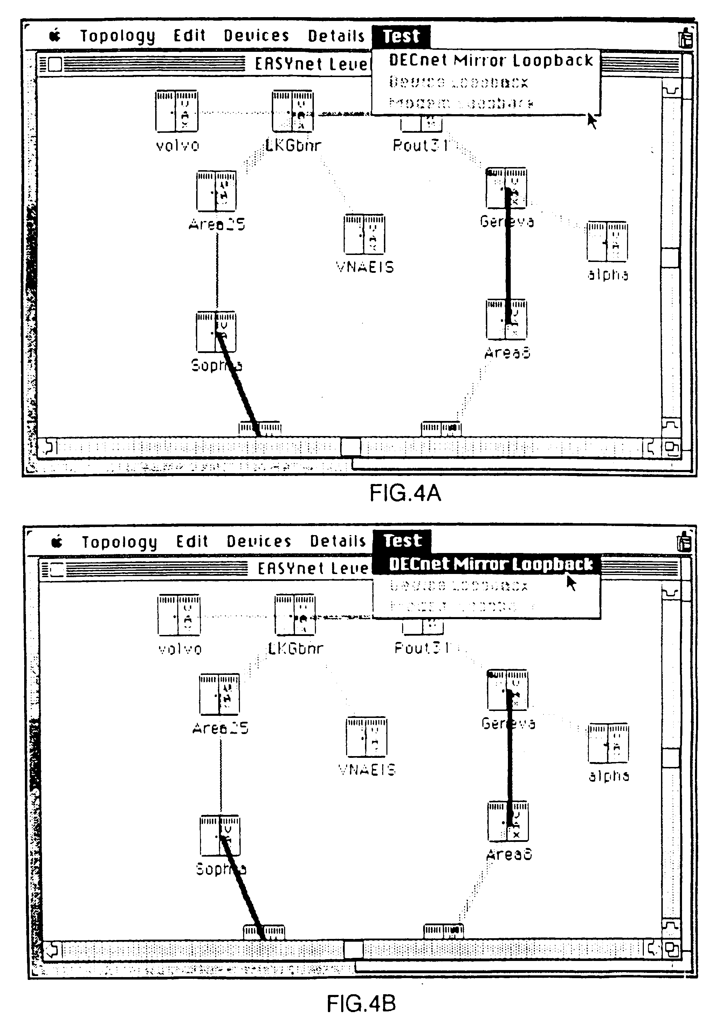

Referring to Fig. 4A, the "Test" menu allows the user to perform test message transmissions between nodes to locate possible errors in the network. The test message is transmitted from a source node to a destination node, and then re-transmitted back to the source node. If the message has not been mutated by the "loop" transmission, it indicates that the communications operated properly.

If one node on the map is selected, the source of the test message is the server that the Macintosh is connected to. If two nodes on the map are selected, the loop transmission occurs between the selected nodes.

Several types of test transmissions may be made, depending upon the types of components sending and receiving the test. Among these are the "DECnet Mirror Loopback", the "Device Loopback", and the "Modem Loopback", each of which is an item in the "Test" menu.

Fig. 4A again illustrates one method used in the invention to prevent users from making errors: the bottom two menu items are inactive (and presented "dimmed", i.e., in a lighter shade of color) because those tests are inappropriate for the entities displayed, and actually cannot be chosen by the user (they are inactive). The top menu item is appropriate for the displayed entities, and as shown in Fig. 4B, the user can choose it.

It should be noted, however, that no entity on the map is selected, and thus all of the "Test" menu items are, for the moment, inappropriate choices. Normally, wherever possible, the user is prevented from making nonsensical choices by removing inappropriate commands from menus or dimming those inappropriate commands. In this case, one would expect that all "Test" menu items would be dim. However, since context sensitive help is not generally available in the embodiment, the purposes of the invention are better served by leaving the "DECnet Mirror Loopback" choice active, and producing an error message if the user initiates it.

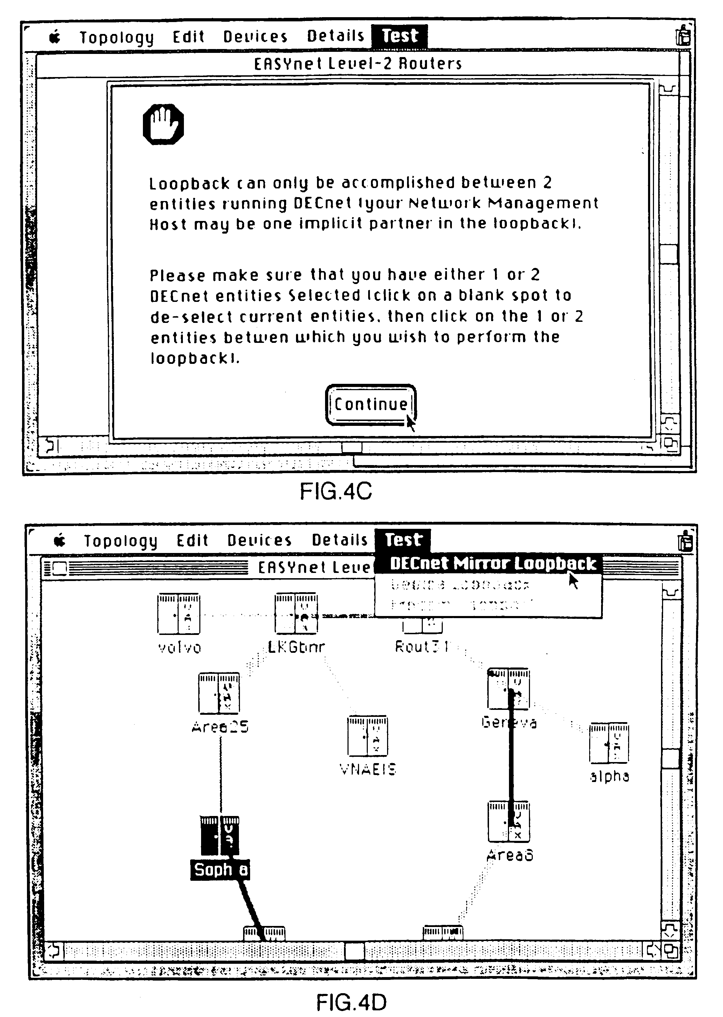

The results of a user attempt to initiate a "DECnet Mirror Loopback are shown in Fig. 4C. The error message demonstrates another aspect of the invention, that of "informative error messages". Full text error messages (rather than obscure, cryptic codes), are always given to the user, providing guidance and explanations where possible, and preventing the user from becoming confused as to the reason for the message. Furthermore, special standard icons, such has the "hand" in the upper left corner, provide generalized information as to the severity of the condition and/or the actions to be taken.

Referring to Fig. 4D, in response to the error message, the user has selected the node "Sophia". The user then chooses "DECnet Mirror Loopback" from the "Test" menu.

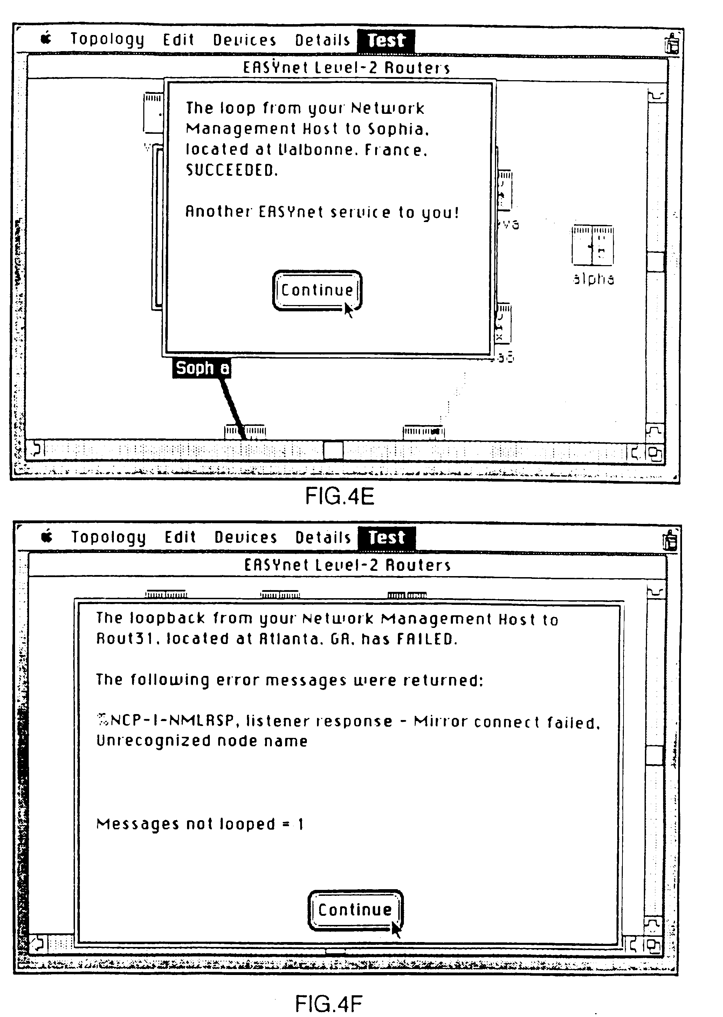

Referring to Fig. 4E, the result is a success message. As can be seen from the success message, the invention always presents easy to understand results. (Had this test been performed in "command line" fashion using the NCP tool, no message indicating success would be given. In fact, in some command line interfaces such as NCP, a successful result is indicated by a new command line prompt with no message at all.)

Not only does the message in Fig. 4E clearly state success of the test, but the location of the node is provided as well. This illustrates another aspect of the invention, that of providing additional information which may be of interest to the user. To provide such extended functionality, the invention may sometimes utilize several complex tools for one user command, all without the user's knowledge. The invention handles all of the necessary underlying commands, and the user can focus on the management task at hand.

Referring to Fig. 4F, the user has initiated a "DECnet Mirror Loopback" on another entity, "Rout31". In this case the loopback failed, therefore, a more detailed message is returned. Note that the bottom portion of the message is the actual text returned from the software tool. This text indicates that the loopback failed because the tool did not recognize the name of the node to which the loopback was directed. However, in the invention, supplementary data is provided, such as the type of test, the source and target of the test, and the location of the target, in order to provide the user with a more meaningful context with which to interpret the error.

### Information from Components

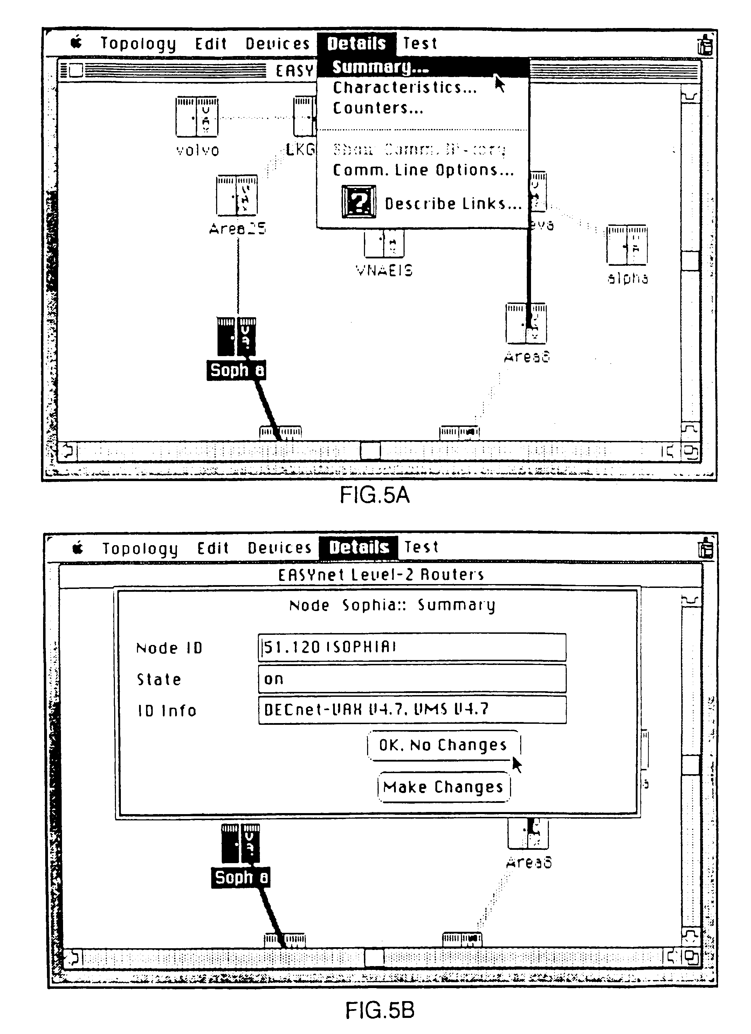

Referring to Fig. 5A, the "Details" menu contains a number of choices which provide details of the selected entities. In this case node "Sophia" is again selected and the user chooses the "Summary" menu from the "Details" menu.

Referring to Fig. 5B, the node "Sophia" responds with its DECnet summary information and the invention formats the information for the user.

The user can change any of the information simply by clicking and dragging over the item to be changed, then by typing in any replacement information, and then clicking on the "Make Changes" button. If the user has no changes to make, the "OK, No Changes" button is clicked to return to the map. Rather, an attempt to perform the change is simulated, with a simulated result that the user does not have sufficient privileges to perform the requested action.

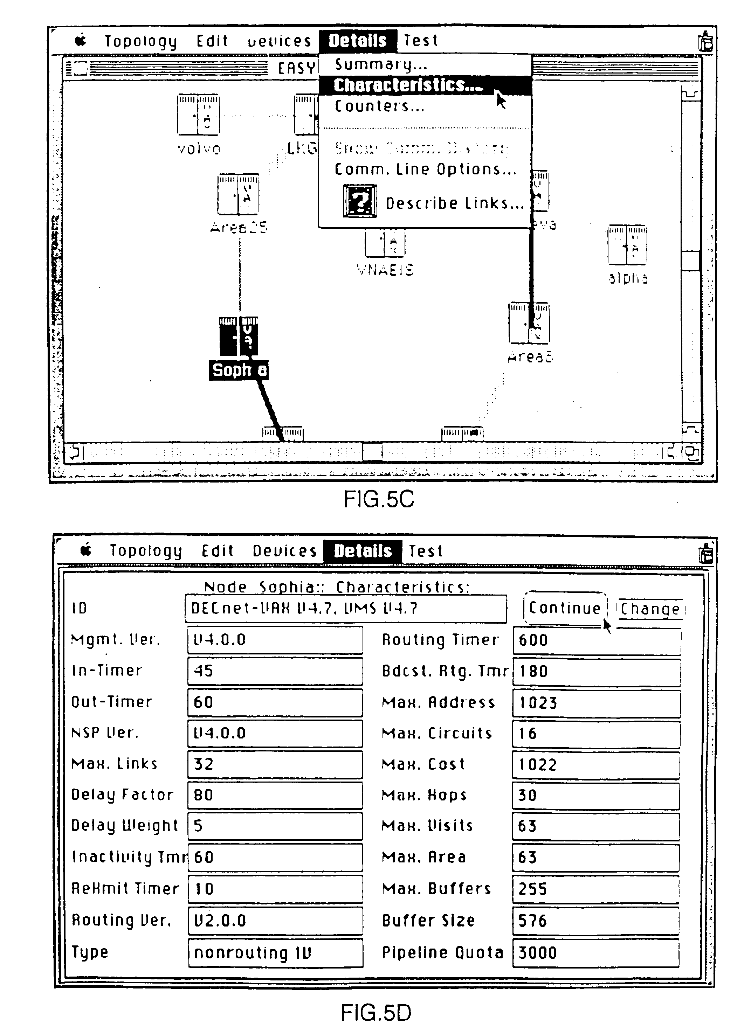

Referring to Fig. 5C, with "Sophia" still selected, the user chooses "Characteristics..." from the "Details" menu.

Referring to Fig. 5D, the invention acquires the DECnet characteristic information from the selected remote node (Sophia in this case) and formats the items for the user. As before, the user can modify any of the characteristics by highlighting the information to be replaced, replacing the information, then clicking the "Change" button. If no changes are desired, the user clicks the "Continue" button.

Referring to Fig. 5E, with node "Sophia" still selected, the user requests that DECnet counters be returned to him by choosing the "Counters..." item from the "Details" menu.

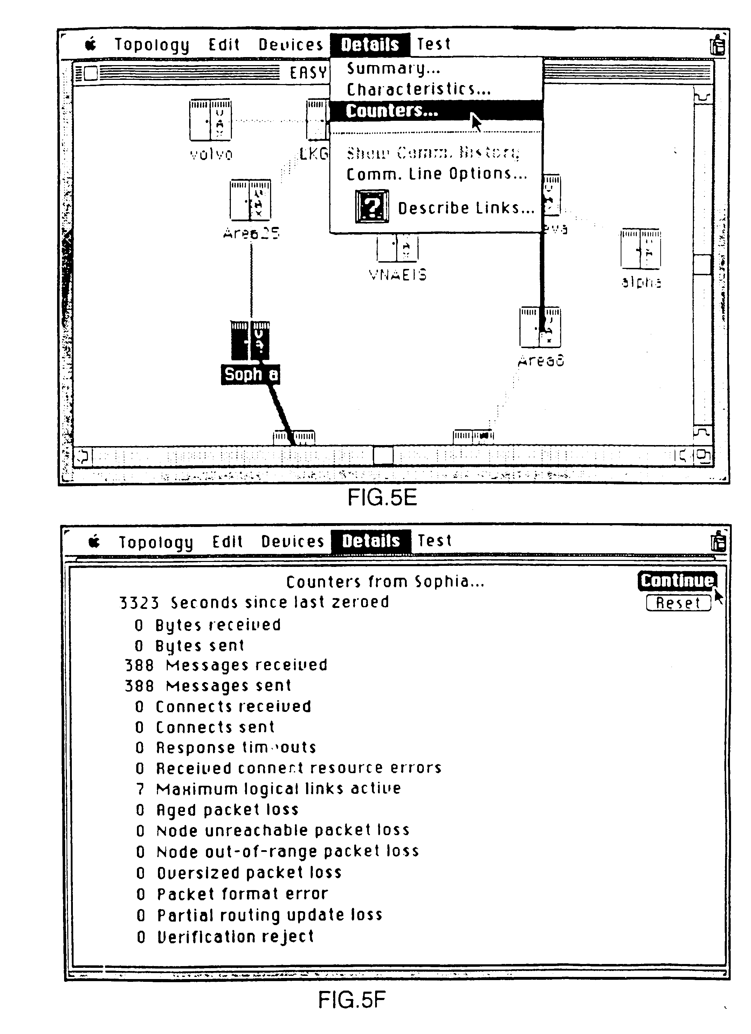

Referring to Fig. 5F, the selected node (Sophia in this case) returns a list of the current DECnet counters to the invention, which has formatted them for the user. Note that since counters can not be changed (only reset to zero), the values are not displayed within rectangular text fields which can be edited. In this way, the user intuitively understands which fields can be modified and which can't.

The user does have the ability to globally reset all of the counters by clicking on the "Reset" button, or to continue without changes by clicking the "Continue" button.

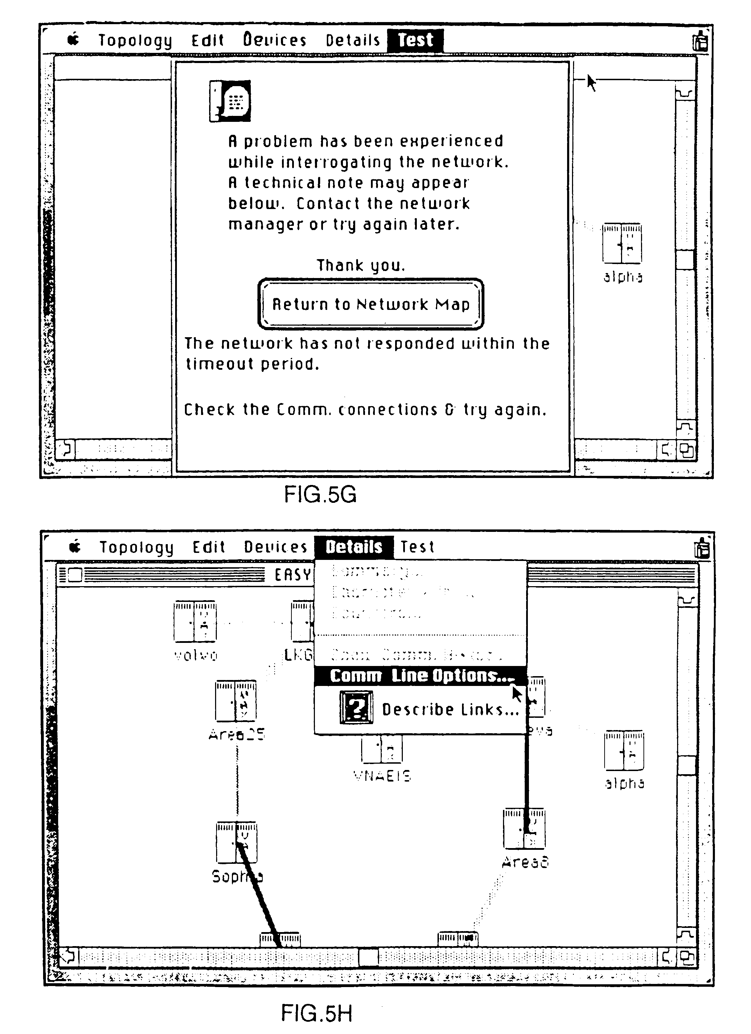

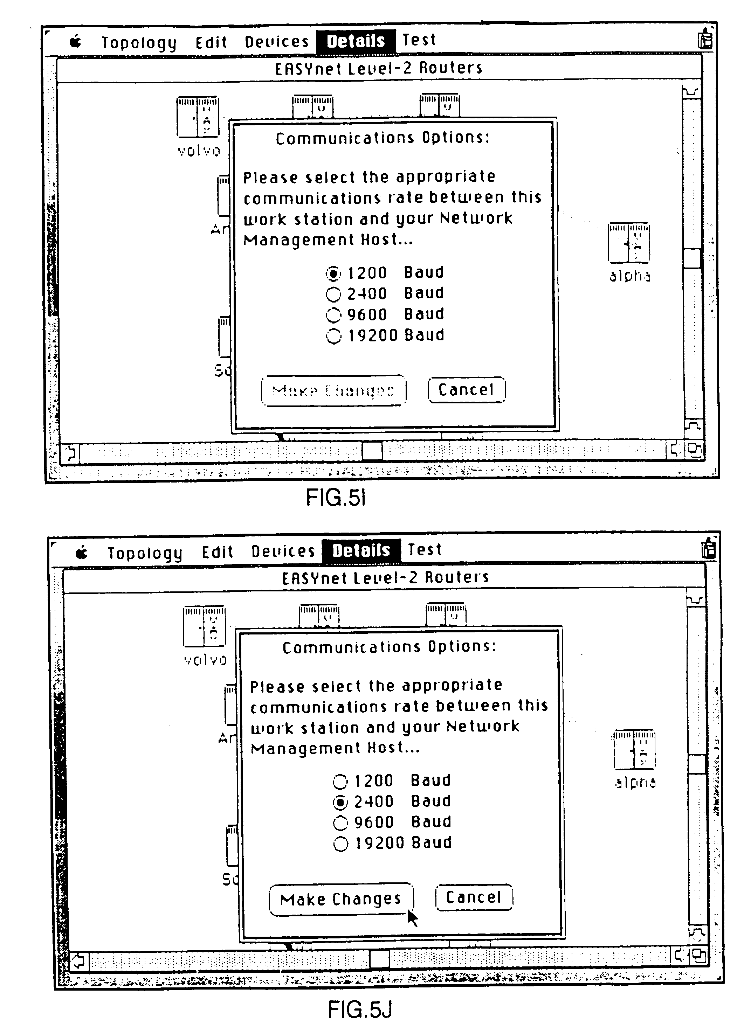

Referring to Fig. 5G, the user has requested some detailed information about a selected node but, either due to the node having shut down or due to an inability of the network management host to communicate with the selected node, the information can not be returned. As with all error conditions, the user is given guidance as to alternative actions that can be taken.

Referring to Fig. 5H, the "Details" menu also contains the item "Comm. Line Options...", which controls the communications between the invention and the network. In this way, the invention manages itself in the same manner as it manages other entities on the network; one concept of the invention is that vastly different entities (including the invention itself) may be managed in a consistent manner.

In Fig. 5H, the user chooses the "Comm. Line Options..." item allowing him to modify the communications parameters between the workstation running the invention and its network management host.

Referring to Fig. 5I, the result is a dialog box. The (currently) allowable communications rates are presented as a series of "radio buttons," only one of which can be chosen at any one time (the "1200 Baud" button is currently chosen.) Clicking on a radio button will choose that button while revoking the button previously chosen.

As discussed before, the invention prevents users from making incorrect or nonsensical choices. In this case, because the user has not changed the communications speed from the initial setting, the "Make Changes" button is dimmed, and thus cannot be chosen.

Referring to Fig. 5J, the user has clicked on the "2400 Baud" radio button to change the communications rate between the invention and its network management host. Note that the choice of the "1200 Baud" radio button was automatically revoked, and that the "Make Changes" button has been undimmed, indicating that it is a viable choice for the user's actions.

Note that in this case, and wherever possible, a "Cancel" button (or other appropriately named button) is provided to allow the user to "back out" of any changes he has indicated in a dialog box.

### Topoloqy Navigation

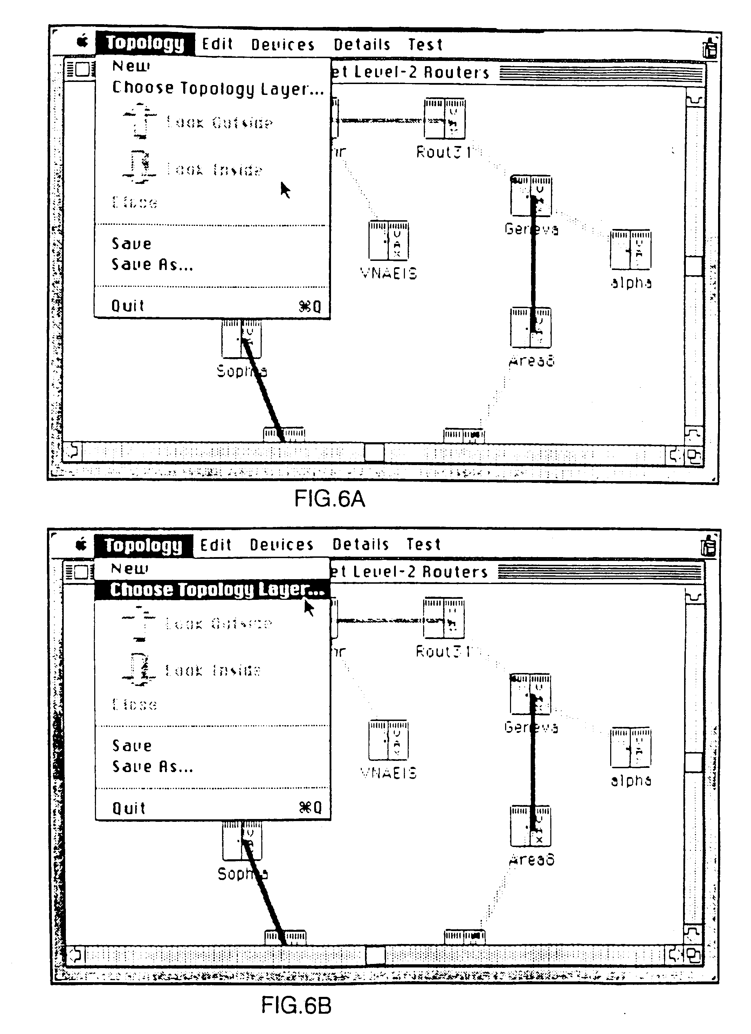

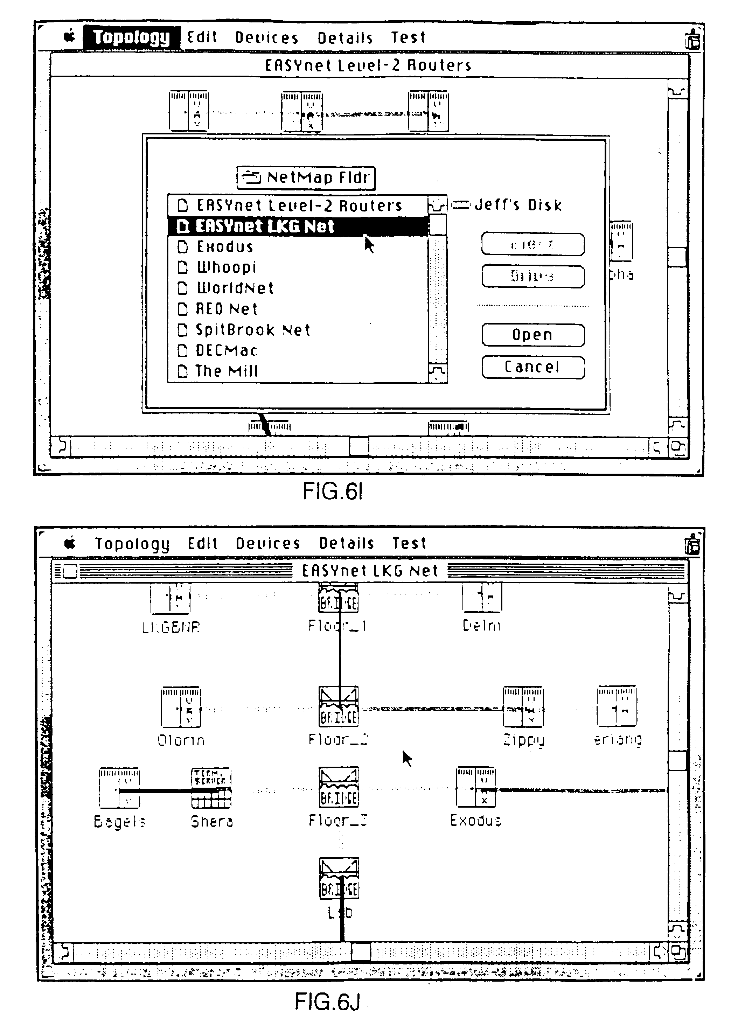

Referring to Fig. 6A, an aspect of the invention is that the user may freely navigate between an unlimited number of topologies, both in a structured and random manner.

The topology paradigm is that of "descending into" the more detailed topology contained within a selected entity, or, conversely, of "climbing out of" a currently displayed topology, thus displaying the less detailed overview which contains that entity (and other entities at the higher topological level). This is analogous to viewing the details of a single city from its street level, and then "climbing out of" the city aboard an airplane and viewing that city, as well as surrounding cities, from a high altitude.

These topologies (or topological "levels") are structured by the user in any way he wishes, allowing physical, logical, or political topologies (the creation of entities within a topology will be described in a later screen). Each topology is stored in a different topology map file 102 (Fig. 1). To transfer between topologies, the program simply reads and displays the contents of the appropriate topology map file.

In Fig. 6A, no entities on the map have been selected, so the "Look Outside" and "Look Inside" topological menu items within the "Topology" menu are dimmed.

Referring to Fig. 6B, one method of topological navigation is totally random; a user who already knows topological relationships can randomly navigate among the topological levels without having to traverse intervening topologies. This is accomplished by choosing the "Choose Topology Layer..." item from the "Topology" menu.

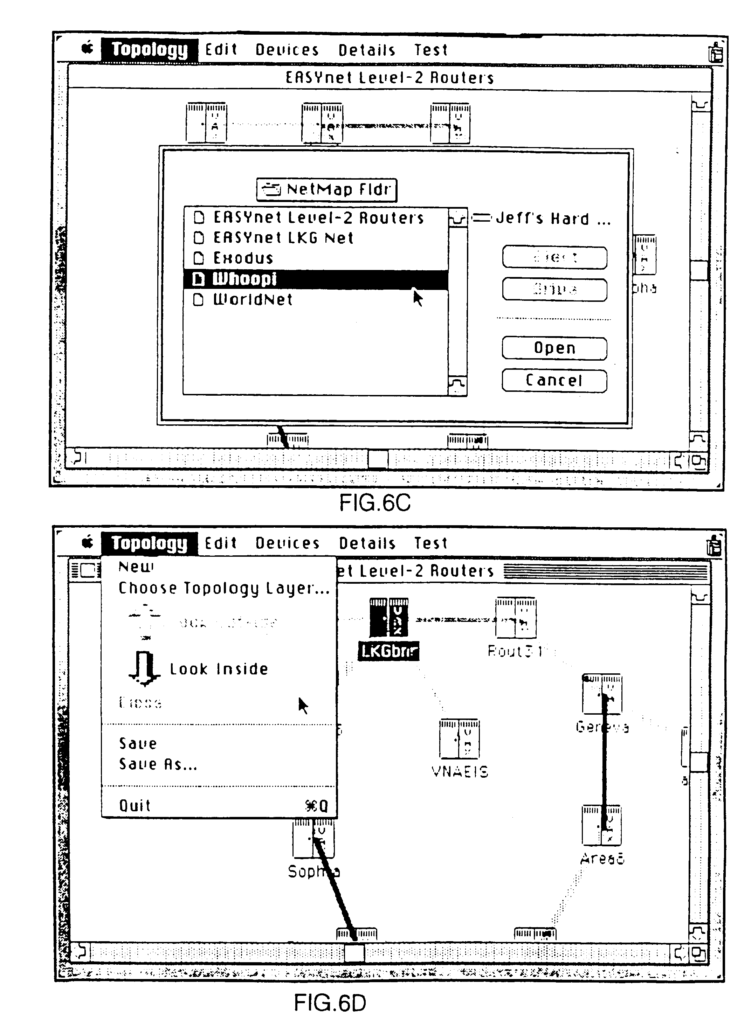

Referring to Fig. 6C, the result of choosing the "Choose Topology Layer..." is a display of all topologies currently defined (five in Fig. 6C). The user can directly proceed to any of these topologies, with no intervening stops, simply by clicking on his choice ("Whoopi", in Fig. 6C) and then clicking on the "Open" button, or by just double-clicking (two rapid mouse button clicks) directly on the name of the topology.

In many cases, however, the user does not initially understand the topological relationships between levels, and may not even be aware of what levels are defined. In these cases, the invention may be used to sequentially traverse the topology tree for the user.

Referring to Fig. 6D, the user wishes to navigate to whatever topology is defined "beneath" the node "LKGbnr" ("LKGbnr" is a DECnet Router in the world-wide DECnet wide area network). To do this, the user has selected the "LKGbnr" entity and pulled down the "Topology" menu. The "Topology" menu shows that the "Look Outside" item is dimmed, indicating that there is no "larger" topological level defined for this entity (i.e. it is not currently contained within a larger topological structure) Note, however, that some of the entities in the "EASYnet Level-2 Routers" topology illustrated in Fig. 6D could have topological parents (which may not be the same), for example, the "WorldNet" topology illustrated in Fig. llA, or other topologies. However, the "Look Inside" item is active, and is about to be chosen by the user. This will automatically display the topology contained "within" the selected entity ("LKGbnr"). Note that this is a "structured" topological change; the user does not need to have any previous knowledge of the overall topology to navigate through it step by step.

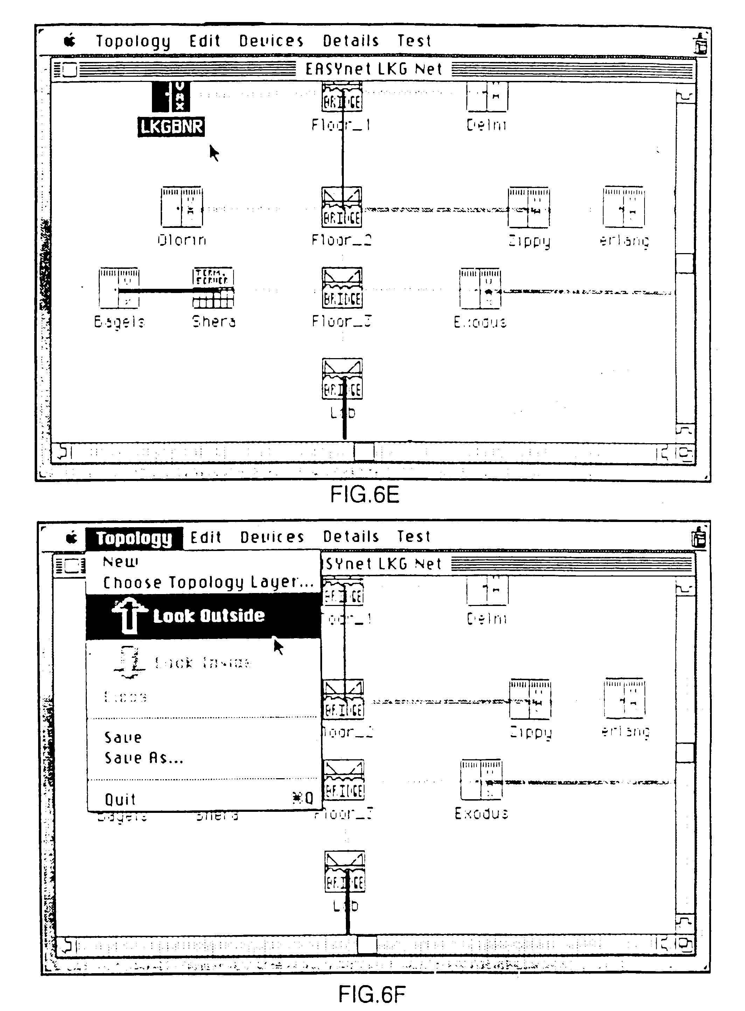

Referring to Fig. 6E, after the user chooses "Look Inside" with "LKGbnr", the display "zooms" open (using an animated technique) revealing the topology which is contained within "LKGbnr" (called "EAsYnet LKG Net", see the title bar). "EASYnet LKG Net" is a portion of the local area network served by the "LKGbnr" router. It is depicted as a vertical Ethernet backbone (for example, traveling between the floors of a building), along with horizontal Ethernet segments on each of the floors (plus some special purpose segments). The horizontal segments are interconnected with the vertical backbone via Ethernet "Bridges" (e.g., LANBridge100 Ethernet Bridges). Note that the identity of the bridges as well as the Terminal Server ("Shera") is intuitive from their icons.

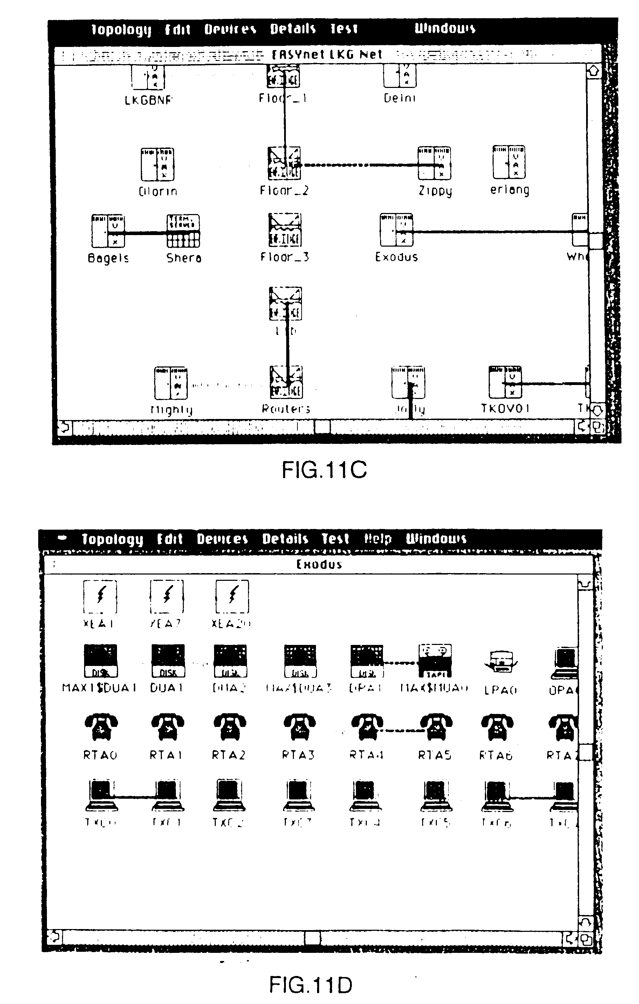

A color version of Fig. 6E (on a smaller scale) is shown in Fig. 11C.

Referring to Fig. 6F, if the user wishes to "ascend" the topology structure to view the map which "contains" a currently displayed entity, this may be done by selecting the entity and then choosing the "Look Outside" menu item from the "Topology" menu. Even if the user has no knowledge of which topology "contains" the selected entity, choosing "Look Outside" automatically "backs out" to the next highest level of the topological structure.

It should be made clear that, although the topology maps may be arranged in a hierarchy where entities on a map represent maps at lower levels and conversely are contained within maps at higher levels, there are other possible relationships. The hierarchy can include a limitless number of levels. For example, in a political (rather than physical) representation of a set of entities, each of two different entities on the political map may be contained within different physical, political, or logical (higher level) maps, which would then be displayed if that entity were selected and "Look Outside" were chosen from the "Topology" menu. Additionally, a given entity may exist simultaneously in more than one topology map.

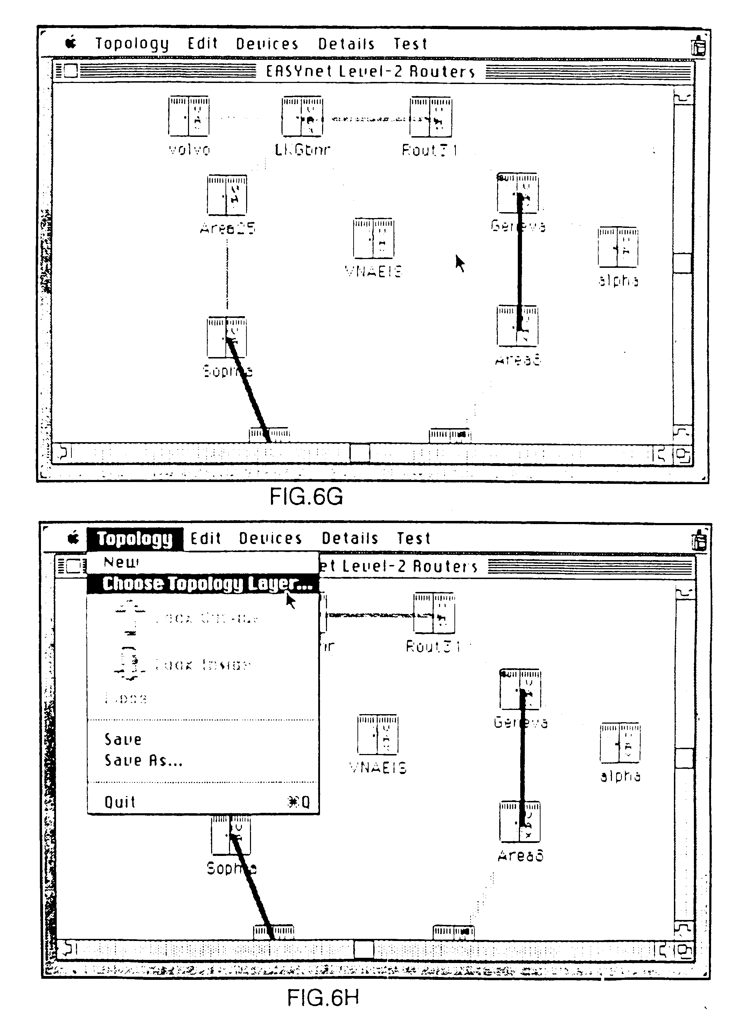

Referring to Fig. 6G, after choosing "Look Outside" in the previous screen, the program has automatically lifted the user to the parent topology (called "EASYNet Level-2 Routers") which "contains" the entity selected in Fig. 6E and Fig. 6F (but obscured in Fig. 6F).

Referring to Fig. 6H, as discussed previously, if a user does understand the topology, the invention does not force the use of structured topological ascents and descents, step by step. Rather, the user can elect to move directly to a topology of interest by choosing the "Choose Topology Layer..." item from the "Topology" menu. Referring to Fig. 6I, the result is a "list box" containing a list of all currently defined topologies. This list can be longer than will fit within the list box, and the shaded "scroll bar" on the right side of the list can be utilized to navigate through the list in the same manner as the maps' scroll bars. Additionally, the user can type any unique series of letters beginning an entry and the list box will automatically scroll to that entry. Once the entry is in view, the user can proceed directly to that topology either by choosing the entry with a single click and then clicking on the "Open" button, or just by double clicking on the entry itself.

Referring to Fig. 6J, the user has double clicked on the "EASYNet LKG Net" Topology to directly proceed to that topological level regardless of any number of intervening topologies.

Referring to Fig. 7A, the user has selected the LANBridgel00 which connects the vertical backbone with the Ethernet segment on the 2nd floor, and has pulled down the "Details" menu.

It is significant to note the menu appears the same as for the VAX computers in Figs. 5A through 5F. Components are viewed consistently regardless of the current topological level, making it more simplistic for a user to understand the management of the network. In Fig. 7A, the user has chosen the "Summary" menu item. The choice is made in exactly the same manner as for a VAX computer, although VAX computers and LANBridge100s are distinctly different hardware components, and require dramatically different software tools to collect "summary" information.

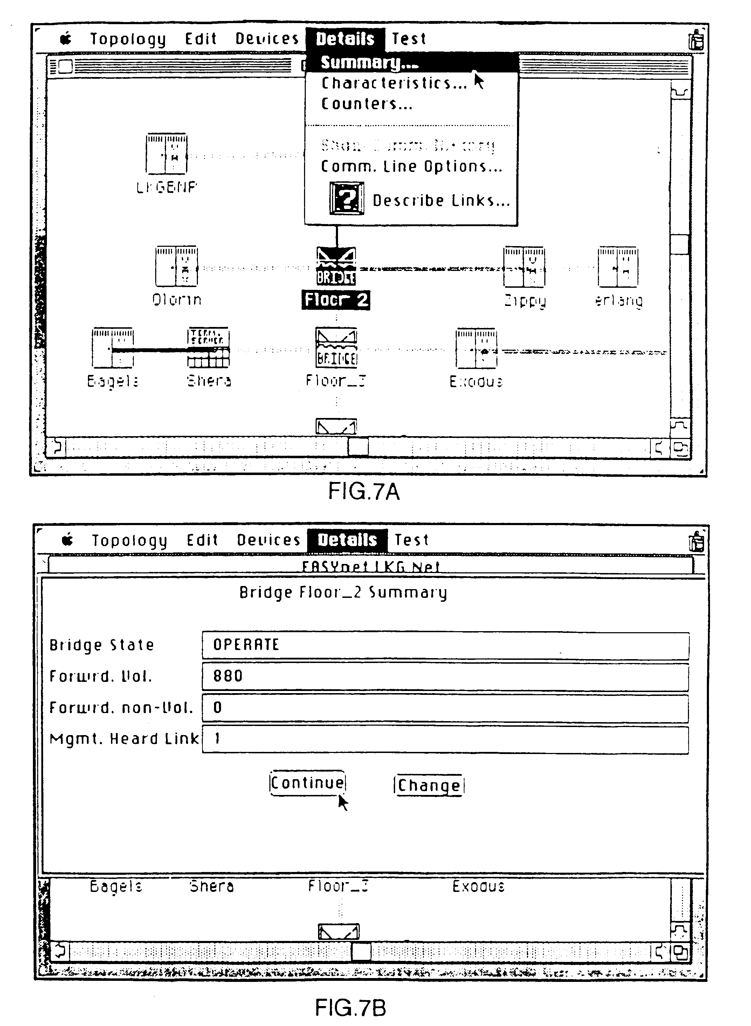

Referring to Fig. 7B, in response to the user's choice, "Summary" information, appropriate to this hardware component, is returned and displayed for the user. As described before, the user can modify the parameters in the standard way, or just click on the "Continue" button.

Thus the invention is able to hide the often significant differences in different types of hardware and software from the user, allowing the user to concentrate on the task at hand (network management or fault isolation) without being concerned with the differences between entities--until a level of detail is reached where such considerations are necessary.

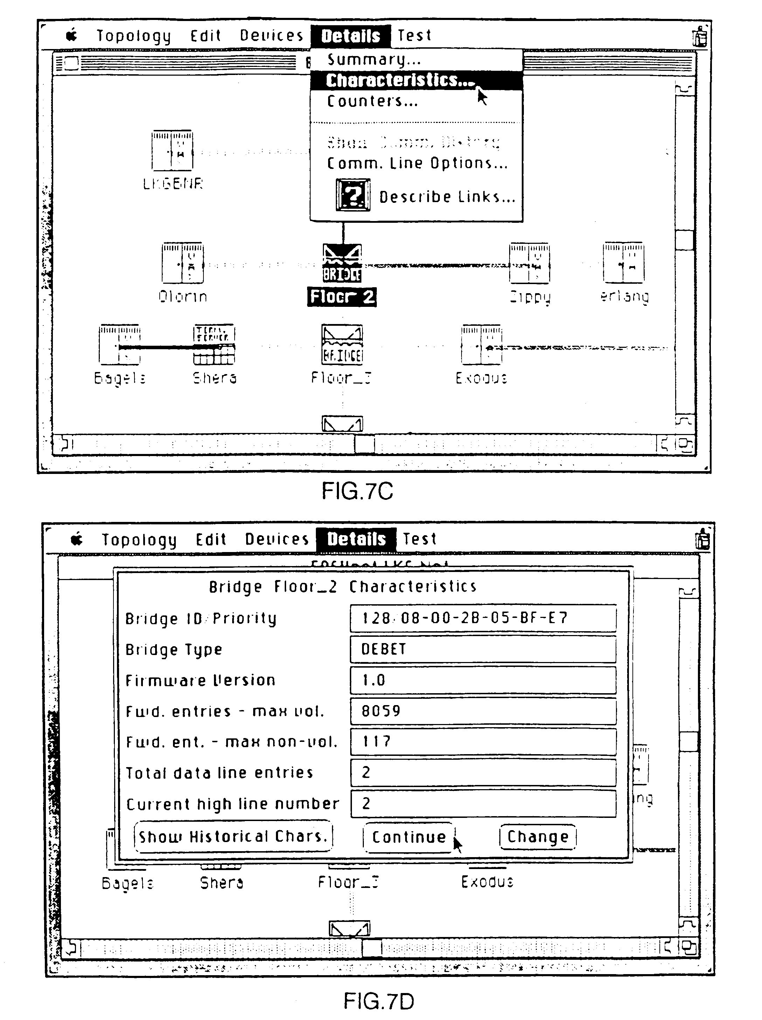

Referring to Fig. 7C, the user is about to request that "Characteristics" of the "Floor_2" LANBridge100 be displayed. Again, note there is no difference between acquiring VAX computer or LANBridge100 characteristics. Referring to Fig. 7D, LANBridge100 "Characteristics" for the "Floor_2" LANBridge100 are displayed.

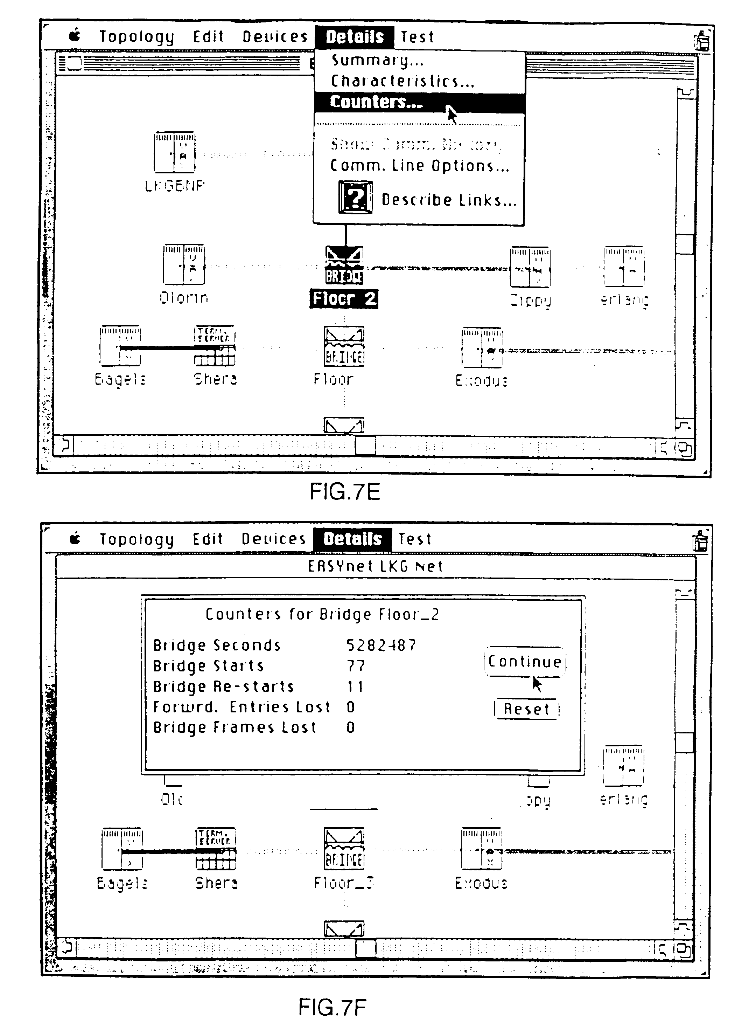

Referring to Fig. 7E, the user is about to request that "Counters" of the "Floor_2" LANBridge100 be displayed. Again, compare this with requesting "Counters" from a VAX computer (Figs. 5E and 5F); the operations are identical from the user's standpoint. Referring to Fig. 7F, counters appropriate to the selected "Floor_2" LANBridge100 are displayed. As for previous Counters, they can be globally reset by clicking on the "Reset" button, or left as they are by clicking on the "Continue" button.

According to the invention, topologies are not limited to traditional "networks." Network components may be further divided into internal networks of sub-components that include, for example, circuit boards and interface cards. Therefore, all aspects of networks, entities which make up the networks, and even the "networks" of entities within individual components may be managed in a similar manner.

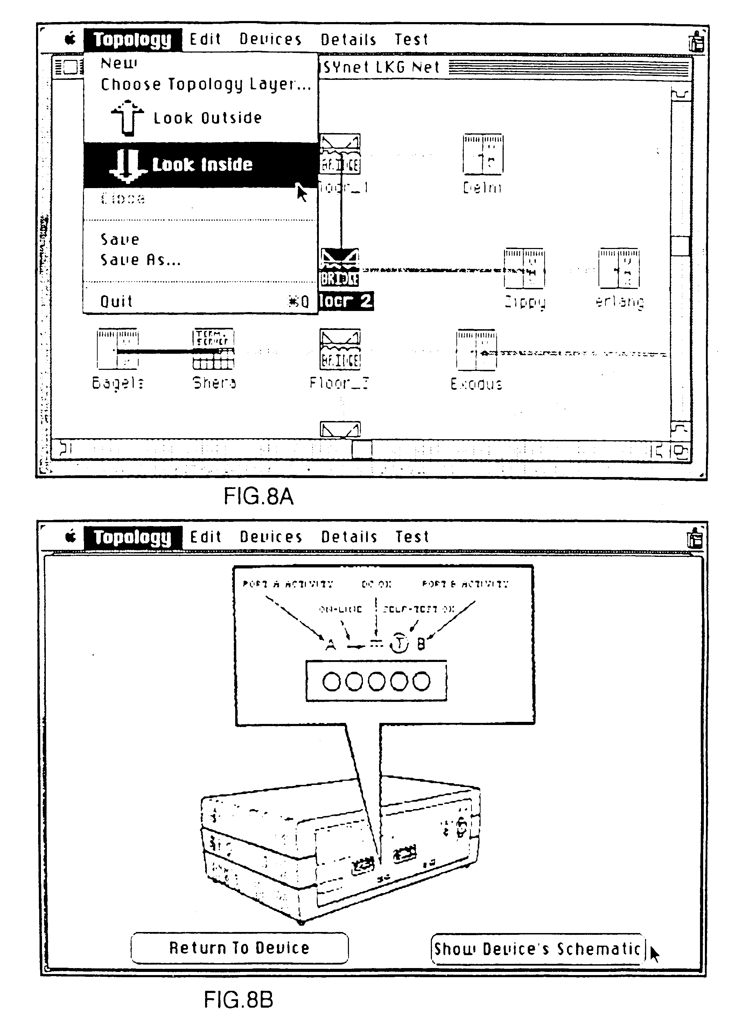

Referring to Fig. 8A, the user still has the "Floor_2" LANBridge100 selected and has pulled down the "Topology" menu. Even though the LANBridge100 is a stand-alone component, the "Look Inside" menu item is still "active". Thus the user chooses it.

Referring to Fig. 8B, "Looking Inside" of a physical component, such as the LANBridge100, displays more detailed information about that component. In this case, information about the controls and lights on its front panel are shown. Where possible, the display of the component should show all available details about the operation of the component. For example, the state of the LANBridge100's front panel indicators could be illustrated in Fig. 8B. Unfortunately, this information is not remotely available from a LANBridge100, however, if it were, the information could be included in Fig. 8B, enhancing its realism and usefulness.

Once "inside" a physical component, additional levels of information, appropriate to any particular component, can be displayed by clicking on the "Show Device's Schematic" button, or the user can return to the map showing the component itself by clicking the "Return To Device" button. In this case, the user is about to click on the "Show Device's Schematic" button.

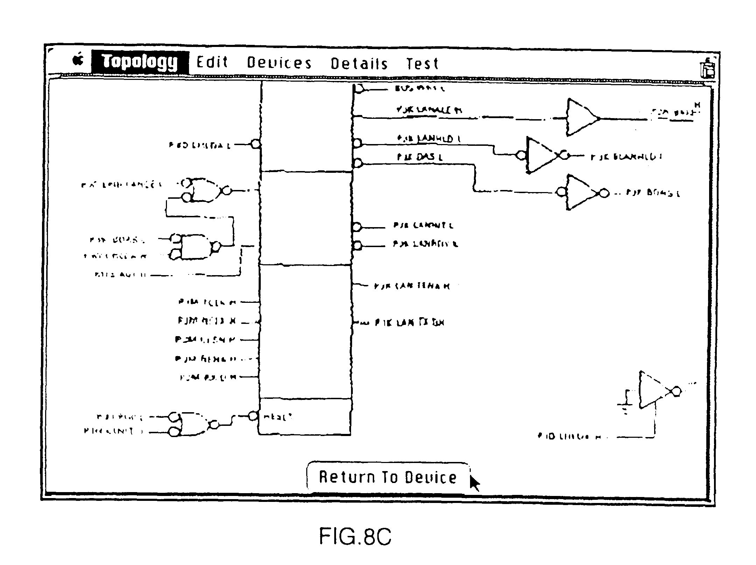

Referring to Fig. 8C, a further level of detail is presented, appropriate to the selected component. In this case, a section of the LANBridge100's schematic is displayed. Here again, were they remotely available, the signals being transmitted through the schematic could be displayed to enhance the realism and usefulness of the display.

In alternative embodiments, the schematic or block diagram would be available in its entirety and the window could be scrolled at the user's discretion in the same manner as discussed above with reference to Fig. 2B. In addition, lower levels of detail could be provided where appropriate. For example, an integrated circuit (e.g., in an electrical schematic) could be selected, and its internal layout could be viewed in an additional map. Thereafter, for example, individual transistors could be selected and viewed with additional maps. The same concept can continue further into lower and lower topological levels, and also to higher and higher levels (perhaps outside of the earth).

The invention makes no artificial distinction between topologies at any level; entities in a world-wide wide area network, entities such as VAX computers in a Local Area Network; entities such as the LANBridge100 within a given LAN, or even additional layers of structure within individual components. Removing the historically artificial distinctions between these topological layers allows the user to concentrate on the task at hand.

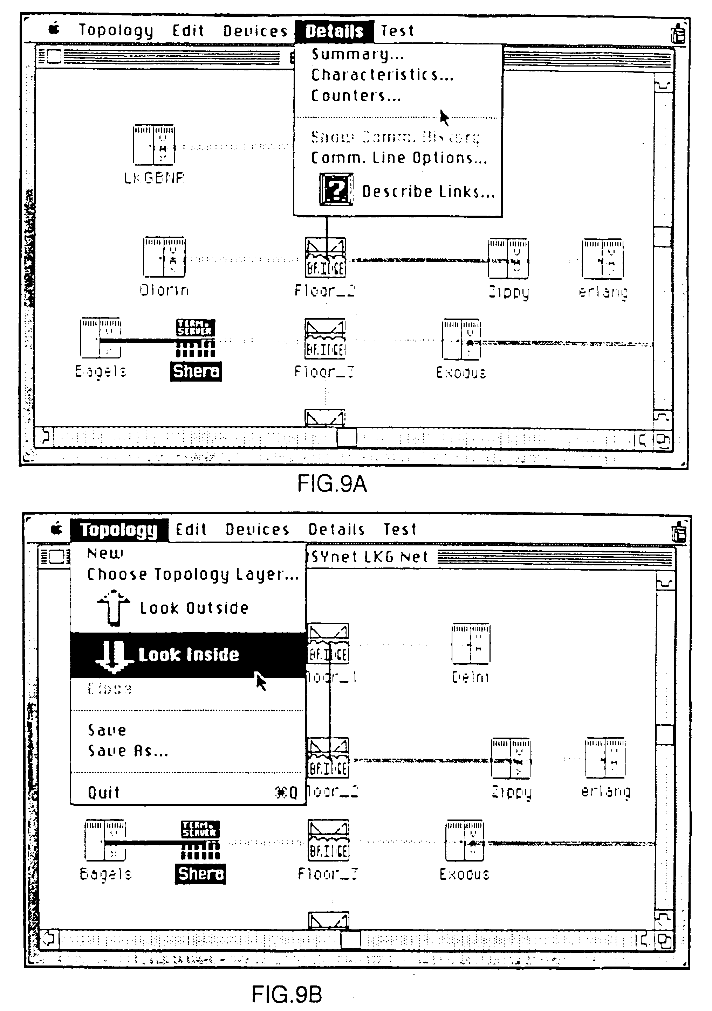

Referring to Fig. 9A, consider the case where the user is examining "Shera" (it is evident from its icon that "Shera" is a Terminal Server). Should the user wish to display "Summary", "Characteristics", or "Counters" information from this component, this is done in exactly the same manner as was done with VAX computers, LANBridge100s, or any other component to be managed, even though this component is radically different from the VAX computers as is the LANBridge100, and again may utilize significantly different software tools to acquire its information.

Although not depicted in the Figures, "Characteristics", and "Counters" information as appropriate to this component are displayed for the user upon request.

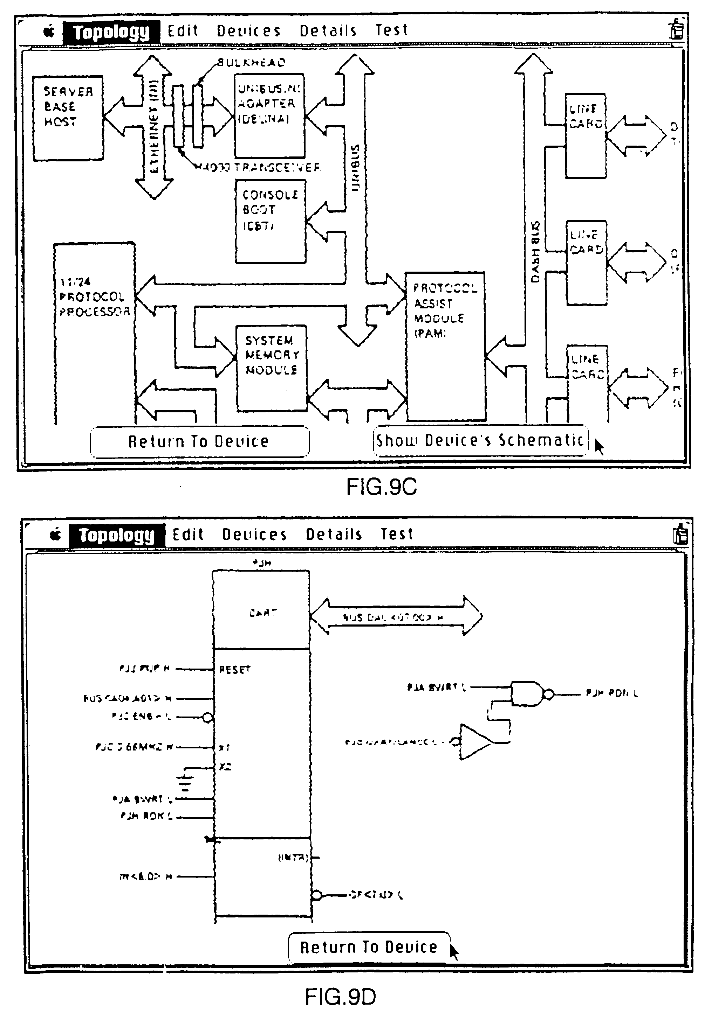

Referring to Fig. 9B, as with other components, with the Terminal Server "Shera" selected, the user can "Look Inside" the component for further information. Referring to Fig. 9C, for this component, the next lower topology is a display of its block diagram. Here again, if they were available, signal values etc. could be displayed on the block diagram.

The user may also request additional details of this component by clicking on the "Show Device's Schematic" button. Referring to Fig. 9D, the result is additional levels of detail. Note that the ability to display continuing levels of detail remain available, and in the same manner, to the user regardless of whether he is negotiating a world wide network or the innards of one component which makes up the network, and regardless of the actual type of component involved.

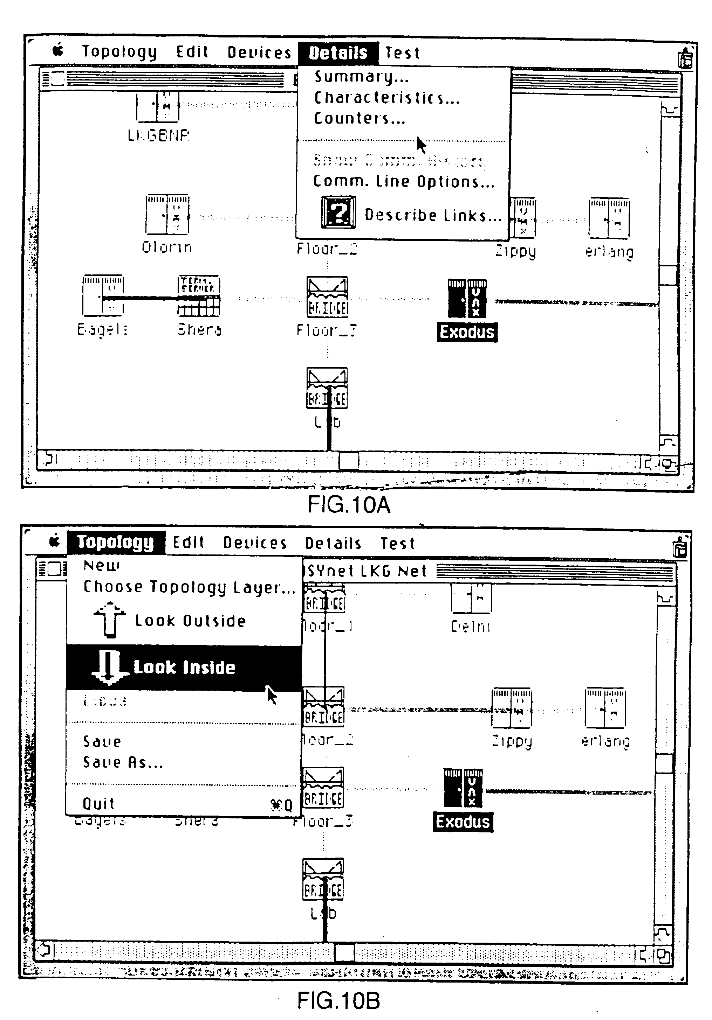

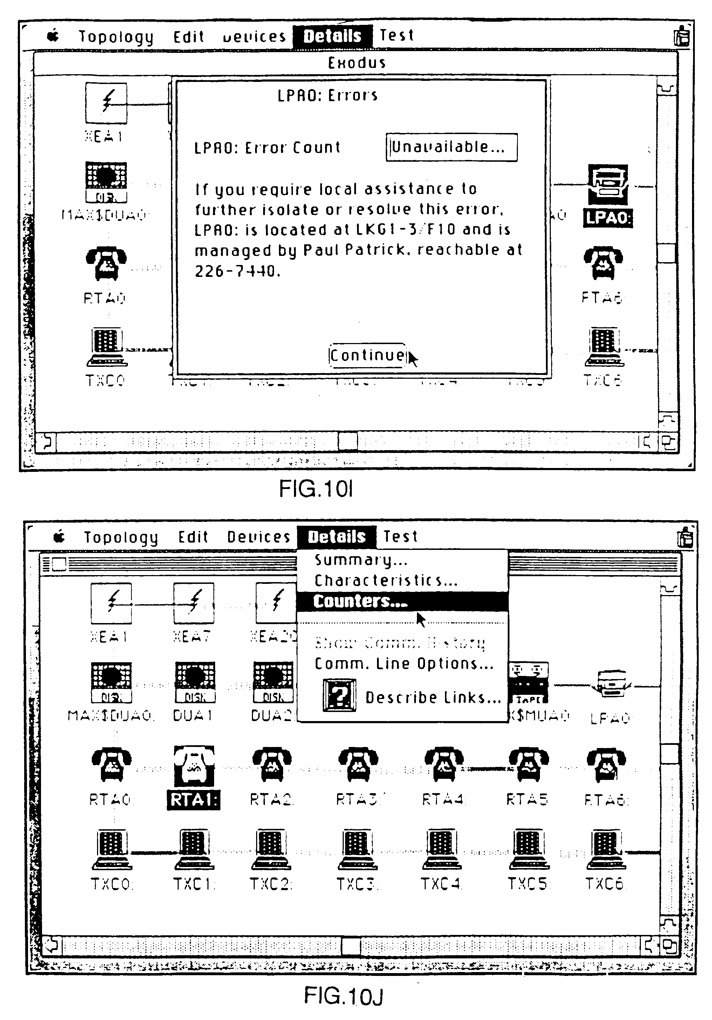

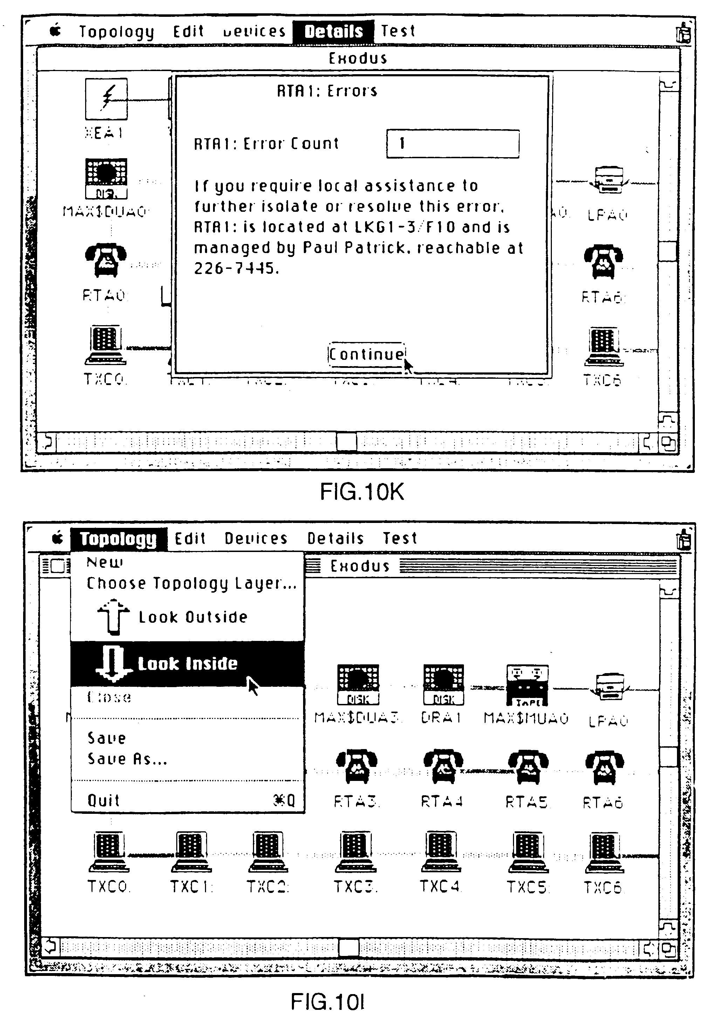

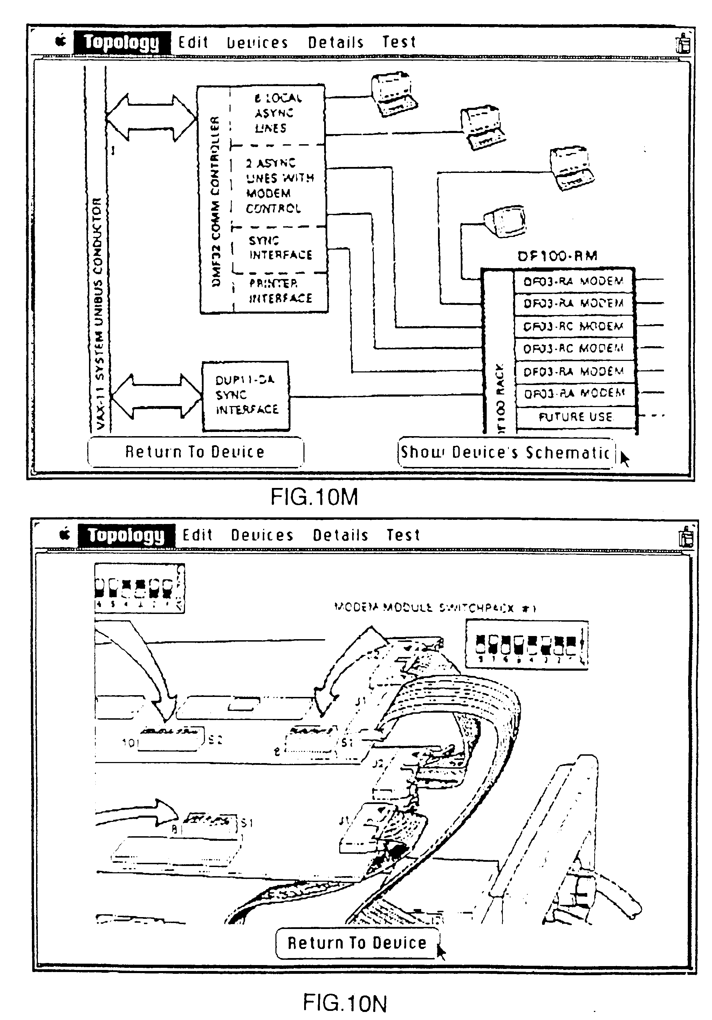

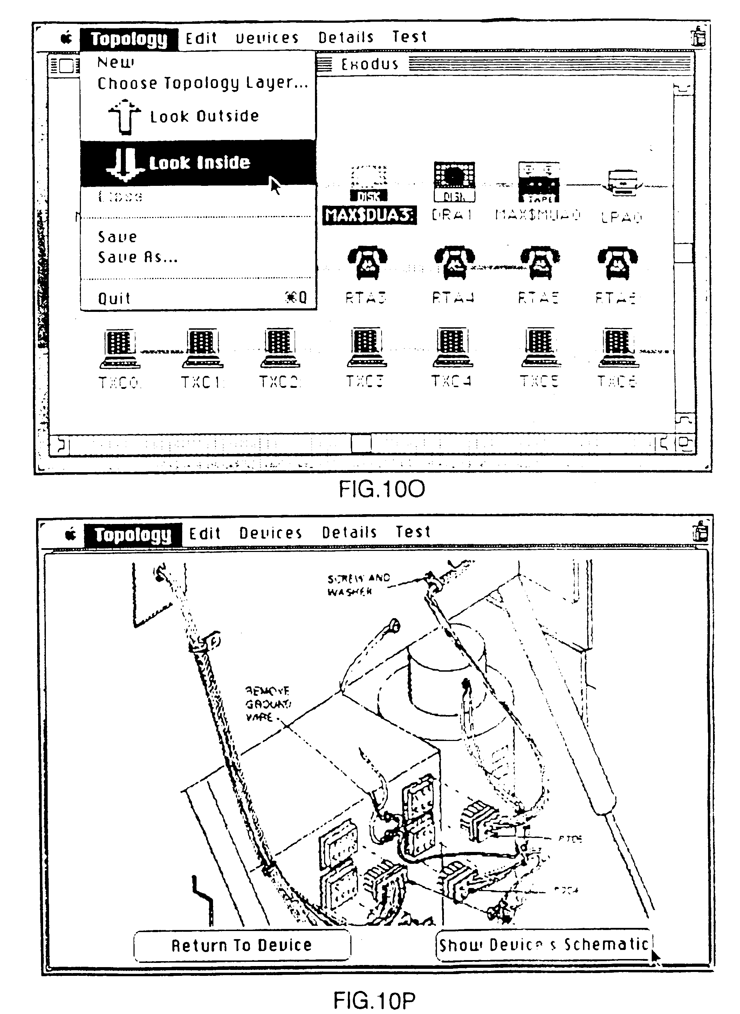

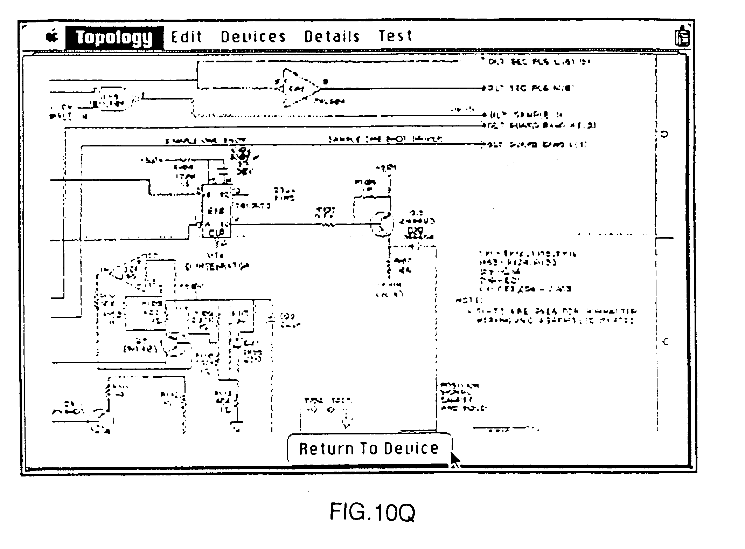

Referring to Fig. 10A, consider the case where the user is examining "Exodus" (it is evident from its icon that "Exodus" is a VAX computer on the Local Area Network). In Fig. 10A, the user has selected "Exodus" and has pulled down the "Details" menu. Note that the items within this menu remain the same as for other VAX computers at different topological levels, as well as for completely different components, such as LANBridge100s and Terminal Servers. The user can, as before, request any of the "Details" from "Exodus."

Referring to Fig. 10B, note that the "Look Outside" item in the "Topology" menu is active while "Exodus" is selected. This indicates that the user could choose that menu item and, in a structured manner, without knowing which "higher level" topology "Exodus" belongs to, be immediately taken to that topology map. In this case, however, the user is preparing to "Look Inside" this particular VAX computer.

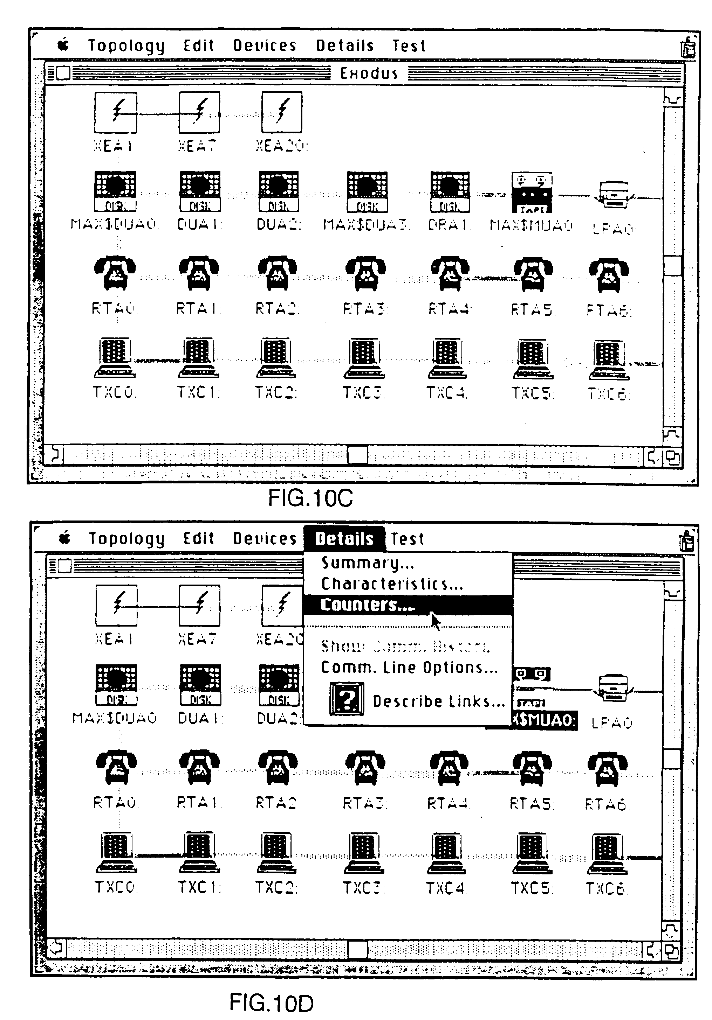

Referring to Fig. 10C, although the user was not aware of it, "Exodus" was not a Router and hence traditionally would not be considered to have additional network structures "under" or "inside" of it. However, in light of its non-traditional view of networks, the invention displays the "interior" network of "Exodus", i.e., the physical and logical subsystems within this particular VAX computer. These subsystems comprise network controllers, disk drives, tape drives, line printers, remote terminal ports, and local terminal ports.

A color version of Fig. 10C (at a smaller scale) is illustrated by Fig. 11D.

Referring to Fig. 10D, continuing the philosophy of allowing a user to interact with any entity on the screen in a similar manner regardless of its location in the network or within a given component within the network, the user has selected the tape drive called "MAX$MUA0:" and is preparing to request its counters.

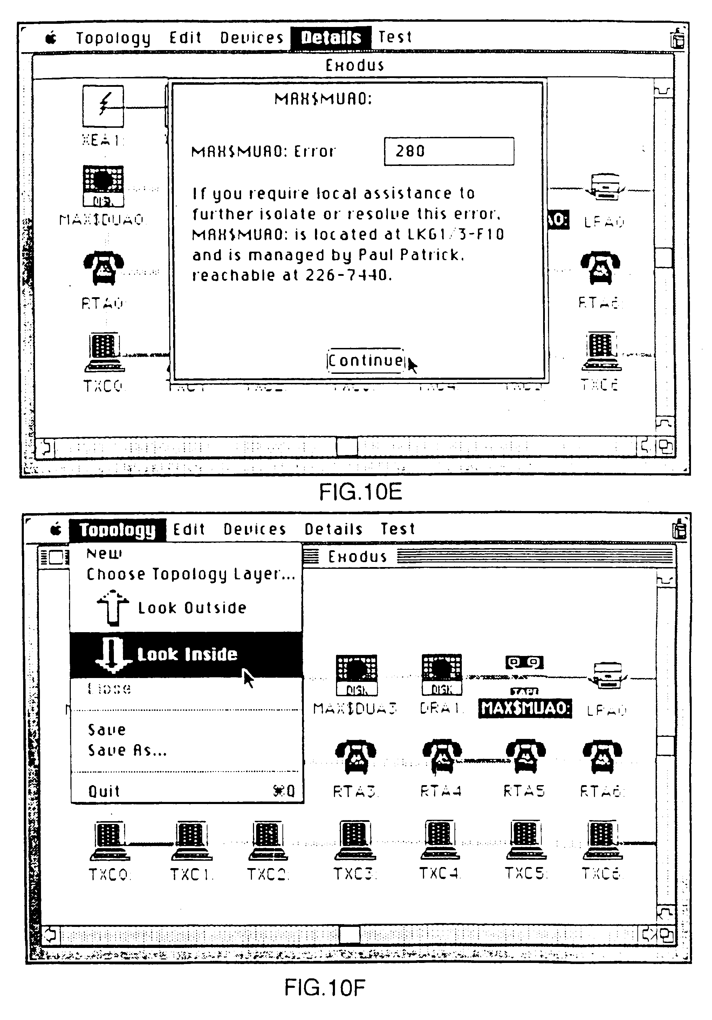

Referring to Fig. 10E, the invention has acquired the tape drive error counter from "Exodus" and displayed it to the user. Note that additional information is presented to assist the manager or diagnostician in further dealing with potential problems: the location of the entity, the person responsible for the entity, and that person's phone number. This additional information is obtained for the entity when it is added to the topology, and stored in the topology map file 102 (Fig. 1), but could be acquired in real-time if made available by the entity. Wherever possible, the entity information is supplied to the user, providing alternative or additional paths to explore in managing the system.

Referring to Fig. 10F, as in any other topology of the network and its components, additional detailed information is available from any selected entity by "Looking Inside" of it. In this case, the user has decided to "Look Inside" of "MAX$MUA0".

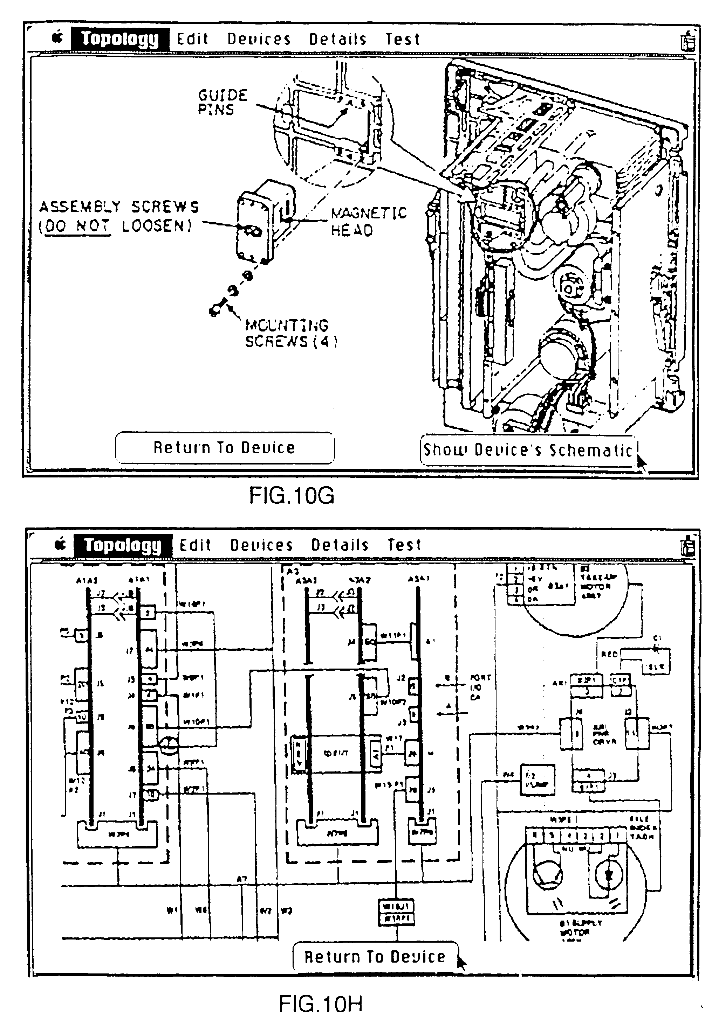

Referring to Fig. 10G, the result as with other components, is additional levels of detail. Fig. 10G shows physical information about one of the tape drive's subsystems. The user is about to request yet more detailed information by clicking the "Show Device's Schematic" button. Referring to Fig. 10H, the additional detailed information about the tape drive is presented to the user. The user is about to return to the map by clicking on the "Return To Device" button.

Referring to Fig. 10I, the user is now seeking information about line printers. To do this, the user has selected the "LPA0:" line printer and requested "Counters" from the "Details" menu. The result is a display indicating that, for some reason, the printer is currently unavailable. However, the display does provide location and contact information should on-site attention be required.

Referring to Fig. 10J, the user is now seeking information about a remote terminal port. To do this, the user has selected the remote terminal port "RTA1:". As with all other entities, the commands and request method remain identical to the user. In Fig. 10J, the user is requesting the counters from the port. Referring to Fig. 10K, the error counter information is returned. Even though this is yet another type of component, the information is displayed in a manner consistent with all other components, and additional information is provided to prevent diagnostic "dead ends".

Referring to Fig. 10L, the user has decided that more information must be retrieved from "RTA1:". Thus, the user has pulled down the "Topology" menu (the menu is obscuring "RTA1:"--it is still selected) and is about to "Look Inside" of "RTA1:".

Referring to Fig. 10M, the first level of the result is a block diagram. The user requests additional information by clicking on the "Show Device's Schematic" button. Referring to Fig. 10N, the next level is detailed switch setting information for the remote portion of the terminal connection. This information could include the actual current state of the switches or indicators where provided by the entity.

Referring to Fig. 10O, the user has decided that more information must be retrieved from the disk drive called "MAX$DUA3:". Therefore, the user has selected "MAX$DUA3:" and is about to "Look Inside" of it. Referring to Fig. 10P, the first level of the result is cable information. The user requests additional details by clicking on the "Show Device's Schematic" button. Referring to Fig. 10Q, the next level of details are displayed.

Fig. 11A illustrates how the invention may be used to map network topologies in any intuitive fashion. In Fig. 11A, a central "Management" node (which may be a network, a single computer or terminal server, or an individual person at a terminal) is providing management services to four customers. The topology represented is not physical or geographical--it is political. The nodes in the topology represent a political structure with which the network is managed itself.

When the manager wished to provide management service to any of the customers, he would select the customer's icon, choose "Look Inside" from the "Topology" menu, and be presented with a new map representing that customer's network. (For example, the Level-2 routers map of Fig. 11B.) Similarly, the manager may provide management service to his own network by selecting the "Management" node on the map and looking inside.

### Help Menu

Also illustrated in Fig. 11A (and in Figs. llB through 11D) are "Help" and "Windows" menus.

The "Help" menu could be used to provide contextual help to the user. That is, depending upon the current situation (currently displayed topology map and/or entities selected), the help menu would create a message box explaining the possible options available in that situation. For example, with a node entity selected in the "EASYnet Level-2 Routers" topology map (Fig. 11B), the help window would indicate the parent and child topology maps for the selected entity, and also explain how a loopback test to the selected entity could be done.

Choosing "Get Help" produces a list box indicating various help topics. These topics include all of the items in the other menus, as well as general topics relating to the operation of the invention. Choosing a topic produces a message box containing a text discussion of the topic (often the text is longer than the box, it may be scrolled forward or backwards by pushing screen buttons).

### Windows Menu

The windows menu is a system-level menu for the "Windows" utility, which lists all currently existing windows and allows the user to choose one, activate it, and bring it to the front of the screen. This is useful if the desired window is partially or totally obscured by other windows.

### Color Illustrations

Referring to Figs. 11A through 11D, the use of color hue (in addition to color brightness) in displaying network information can substantially increase the intuitiveness with which information is displayed. For example, the line icons which have a green color hue represent links that are in "good health", i.e., they currently have low error rates, etc. However, the line icons having a blue color hue represent links in fair health, and the line icons having a red color hue represent links in poor health. These colors may be user-alterable to account for cultural differences in the interpretation of colors.

This health information may be coupled with the visual usage information described in Fig. 2G to visually indicate where immediate network management attention is required. For example, in Fig. 11B, the link between the router "Geneva" and the router "Area8" is experiencing high utilization (the icon has high color brightness), and also has poor health (the icon has a red hue). The same situation is occurring in the link between the router "Sophia" and the router "CGHub". This indicates a serious problem: a communications bottleneck may be occurring between the routers "CGHub", "ValHub", and "Area8" and the remainder of the routers. This bottleneck may be aggravated by high error rates on two of the key links. It is thus visually clear that the manager should focus immediate attention on these links to avoid a possible total communications breakdown.

### Error Message Boxes

Referring to Fig. 11E, when a user requests information from an entity (for example, by choosing "Get Info." from the "Devices" menu), if that information is unavailable (in one embodiment, this occurs when there is no information for the entity in the topology map file 102; in other embodiments, the information may also be retrieved from the entity itself), then a message box indicating this fact is returned. (This box was not illustrated in any of the previous figures.) Note that the box also provides additional information on how to resolve the error.

### The Program

In a particular embodiment, the program 100 (Fig. 1) implementing the user interface described above comprises object code compiled from source code written in the Think's Lightspeed PASCAL Language, Version 2.0, available from Symantec, Cupertino CA. The contents of the source code files are indexed by brief descriptions in Appendix A.

### Visual Resources

The icons and windows used by the program were defined using the ResEdit developer's tool (provided by Apple Computer through APDA, 290 SW 43rd St., Renton, WA 98055). The icon and window definitions are stored in binary resource files, and are accessed by the program as required. Fig. 11F illustrates the fine detail of one such icon (not illustrated in the previous figures) for a UNIX node. The figure shows both the pixel-level details and the resulting actual-size image.

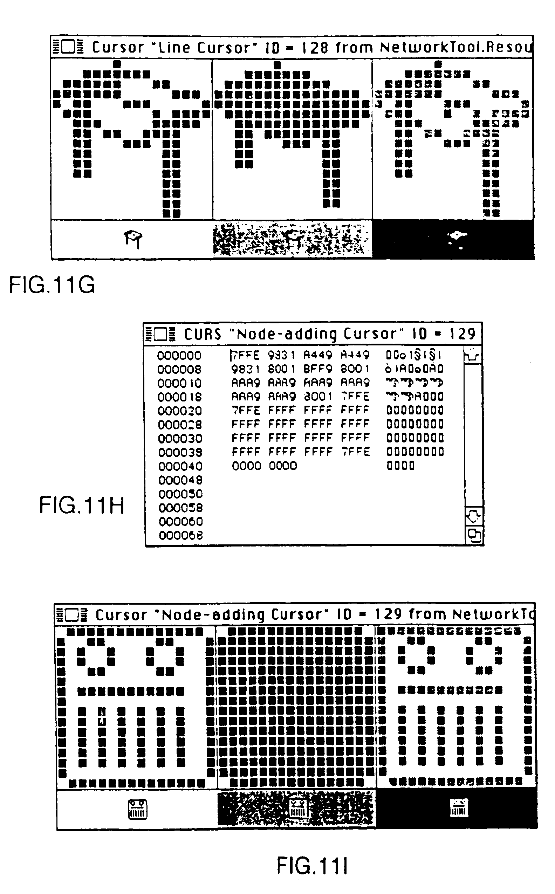

Fig. 11G illustrates the "telephone poles" icon (used as the cursor in the add line mode), as displayed in normal, darkened, and reverse-video.

Fig. 11H illustrates a hexadecimal equivalent map for the pixels of the node icon (used as the cursor in the add node mode), and Fig. 11I illustrates the resulting icon and pixels in normal, darkened, and reverse-video.

The low-level diagrams illustrated in Figs. 8B, 8C, 9C, 9D, 10G, 10H, 10M, 10N, 10P, and 10Q were scanned from actual drawings by a Thunderscan scanner (available from Thunderware, 21 Orinda Way, Orinda, CA, 94563), and were then stored as Macintosh PICT resources. The pictures are accessed by the program where appropriate to produce the displays.

### Main Program

Referring to Fig. 12, the main program comprises initialization routines 200, a main event loop 202, and clean-up routines 204.

Referring to Fig. 13, in the main event loop 202, during each cycle, a new event is retrieved 210 from the Macintosh operating system through the "GetNextEvent" trap. Subsequently 212, where appropriate, the cursor icon is changed (for example, to a node icon during the addition of a new node). The event is then checked 214 to determine if it requires further processing. If not, the loop closes 210.

However, if the event does require further processing, one of four routines is invoked depending upon the type of the event. If the event is a "mouse down" (i.e. a depression of the mouse button), it is processed by the "DealwthMouseDowns" routine 216. If the event is an "activate" (i.e., an activation of an inactive window), it is processed by the "DealwthActivates" routine 218. If the event is a "key down" (i.e., the depression of a key at the keyboard), it is processed by the "DealwthKeyDowns" routine 220. Finally, if the event is an "update" (e.g., an event to update the screen image), it is processed by the "DealwthUpdates" routine 222.

After event processing, the main event loop checks 224 if the global flag "Finished" has been set by the processing routines. If so, the loop terminates. If not, the loop closes 210.

Referring to Fig. 14A, the "DealwthActivates" routine checks 230 if the "activate" activates the window for the program. If so 232, the port is set active and the routine ends. If not, the routine ends directly.

Referring to Fig. 14B, in the "DealwthKeyDowns" routine, the "key down" is first converted 234 to an ASCII character. Then the program checks 236 to determine if the command key was depressed (this allows keyboard "shortcuts" to menu choices). If it is 238, the "ProcessMenu_In" routine is invoked and the routine ends. If not, the routine ends directly.

Referring to Fig. 14C, in the "DealwthUpdates" routine, the current port is first saved 240. Next, the port in which the update occurred is made current 242. The update is then performed by a call to the "DotheActualUpdate" routine 244, and then the current port is restored 246 and the routine ends.

Referring to Fig. 14D, in the "DealwthMouseDowns" routine the location of the "mouse down" is first determined 250. If the "mouse down" occurred in the menu bar 252, the "ProcessMenu_in" routine is invoked. If the "mouse down" occurred in a System Window 254 (desk accessory window), a system click is transferred to the operating system. If the "mouse down" occurred in the "drag" area of the window (at the top of the window where the window name is displayed) 256, the "DragWindow" routine is invoked.

If the "mouse down" occurred in a "Grow" region 258, then the routine checks if the window containing the region is in the front. If it is not 260, the window containing the button is chosen. If it is 262, the window is resized.

If the "mouse down" occurred in a "Go Away" button 264, then the routine checks if the button is for the window containing the network map. If it is 266, then the "Finished" flag is set to true (exiting the program at the end of the main event loop). If it is not 268, then the window containing the button is hidden.

If the "mouse down" occurred in the content of the window 270, then the exact location of the "mouse down" must be further determined. If the "mouse down" did not occur in the front window, then the window in which it occurred is chosen 272.

Otherwise 274, if the "mouse down" occurred while in the "Add Line" mode (in this mode a mouse click will start the addition of a line), then the "DoAddLine" routine is invoked 276. This routine will draw the ghost lines while the mouse is dragged, and will connect the link when the mouse button is released.

Otherwise 278, if the "mouse down" occurred while in the "Add Node" mode (in this mode a mouse click will place a new node in the topology and on the map), then the "DoAddNode" routine is invoked 280. This routine will create dialog boxes for configuring the new node.

Otherwise 282, if the "mouse down" occurred while in a control 282 (such as a scroll bar), the appropriate action will be produced by the "TracktheControl" routine 284.

Otherwise 286, if the "mouse down" occurred in a text rectangle (such as the data rectangles that allow the user to edit the items in the details menu), the proper reaction is created by a call to the "TEClick" routine 288. Otherwise, the "mouse down" occurred somewhere in the content of the window (such as on an icon or on blank space), this is handled by a call to the "DoInContent" routine 290.

Events (either mouse downs or key downs) which invoke menu items are routed to the ProcessMenu_in routine. This routine is illustrated by Fig. 15. First, the menu number and item number is determined 300.

If an item in the "Apple" menu is chosen, the routine checks 302 if the choice is the "About ..." item. If so 306, a dialog box describing the invention is created by the "AboutNetMap" routine. Otherwise 304, the appropriate desk accessory is invoked.

If an item in the "Edit" menu is chosen, the routine checks 308 if the choice is the "Clear" item. If so 310, all of the currently selected entities are removed by the "RemoveSelectedEntities" routine.

If an item in the "Devices" menu is chosen, the routine checks the item chosen. If the chosen item is the "Add Line" item 312, the routine deselects all entities (by a call to "DeSelectAllEntities"), sets the "DoAddLineFlag" (putting the program in "add line" mode), and resets the cursor to the telephone poles cursor. If the chosen item is the "Add Node" item 314, the routine deselects all entities (by a call to "DeSelectAllEntities"), sets the "DoAddLineNode" (putting the program in "add node" mode), and resets the cursor to the node cursor. If the chosen item is the "Get Info" item, the routine retrieves information from the selected entity by a call to the "DoDevicesGetInfo" routine (this routine retrieves the appropriate entity information from the topology map file 102 (Fig. 1), and formats it into a dialog box for display to the user).

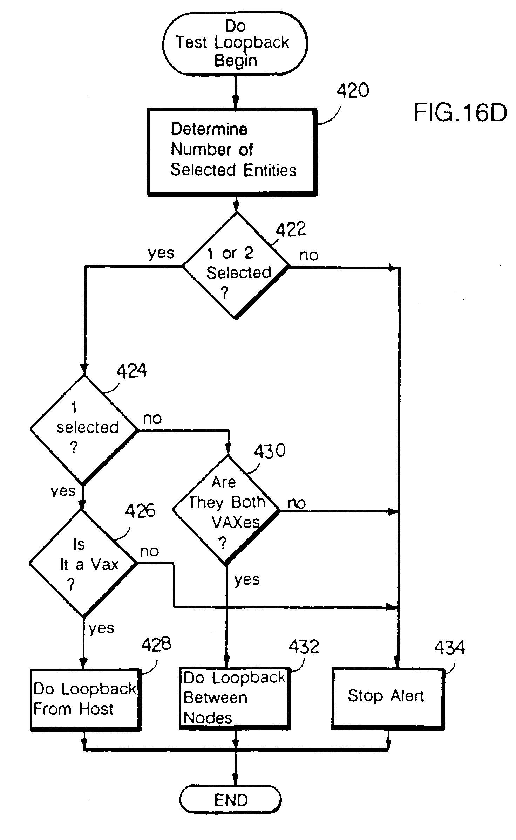

If an item in the "Test" menu is chosen, the routine performs a loopback test by invoking the "DoTestLoopBack" routine 318 (see Fig. 16D).

If an item in the "Help" menu is chosen (see Figs. 11A through 11D--this menu is not illustrated in Figs. 2A through 10Q), the routine provides the user with on-line help by invoking the "DoHelpHelp" routine 320.

If an item in the "File" menu (which is called the "Topology" menu on the screen) is chosen, the routine checks the item chosen. If the "New" item is chosen 322, the routine clears the map by invoking the "DoFileNew" routine. If the "Open" item (which is called the "Choose Topology Layer ... " item on the screen) is chosen 324, the routine reads a topology map file by invoking the "DoFileOpen" routine. If the "Look Inside" item is chosen 326, the routine reads the topology map file for the topology "below" the currently selected entity by a call to the "DoFileLookInside" routine. If the "Look Outside" item is chosen 328, the routine reads the topology map file for the topology "above" the currently selected entity by a call to the "DoFileLookOutside" routine. If the "Close" item is chosen 330, the current topology file is removed from the screen by invoking the "DoFileClose" routine. If the "Save" item is chosen 332, the current topology is saved to its file (or to a new file) by invoking the "DoFileSave" routine. If the "Save As" item is chosen 334, the user is prompted for a file name, and the current topology is saved to the named file, by invoking the "DoFileSaveAs" routine. ("DoFileSaveAs" is invoked by the "DoFileSave" routine if the current topology is new). Finally, if the "Quit" item is chosen 336, then the global "Finished" flag is set (which will exit the main event loop, see Fig. 13).

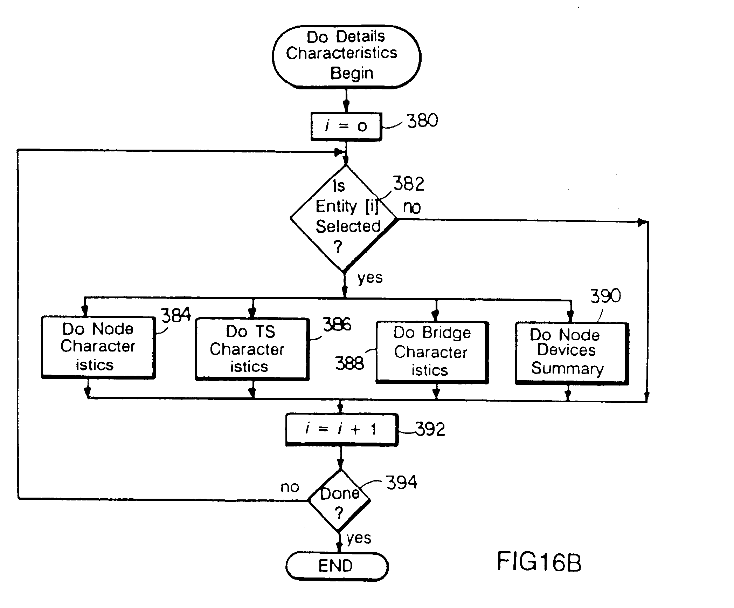

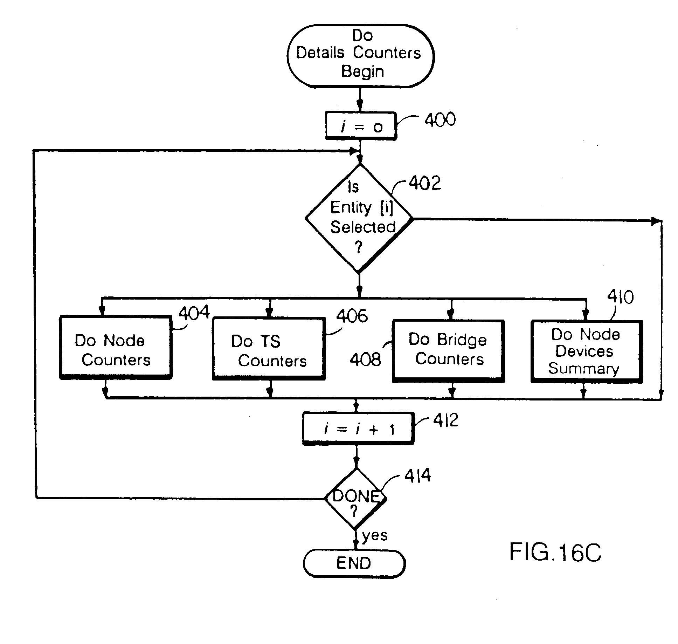

If the "Details" menu is chosen, the routine checks the item chosen. If the "Summary" item is chosen 338, the routine displays summary information for the selected entities by invoking the "DoDetailsSummary" routine (see Fig. 16A). If the "Characteristics" item is chosen 340, the routine displays characteristics information for the selected entities by invoking the "DoDetailsCharacteristics" routine (see Fig. 16B). If the "Counters" item is chosen 342, the routine displays counters for the selected entities by invoking the "DoDetailsCounters" routine (see Fig. 16C). If the "Comm. History" item is chosen 344, the routine displays an information box 344 (this box states that Comm. History is not currently implemented, but could be easily). If the "Comm. Options" item is chosen 346, the routine displays a dialog box indicating the available baud rates by invoking the "DoDetailsCommOptions" routine. If the "Describe Links" item is chosen 348, the routine displays a message box describing the way in which communications links are displayed.

Referring to Fig. 16A, the "DoDetailsSummary" routine produces dialog boxes containing summary information from the selected entities. First a variable i is initialized 360. Next, the routine checks 362 if entity number i is selected. If it is, the appropriate routine (based on the type of the selected entity) is called to create the summary information. In either case, the variable i is incremented 372, and the routine checks 374 if it is done (i.e., if it has checked all entities). If the routine is not done, it loops 362. If it is done, it ends.

If the entity is selected, its type is checked, and: if it is a node (i.e. VAX computer) 364, the "DoNodeSummary" routine is invoked; if it is a terminal server 366, the "DoTSCharacteristics" routine is invoked (at this time, summary information is not available from terminal servers, thus, characteristics are displayed); if it is a bridge 368, the "DoBridgeSummary" routine is invoked; if it is a node component (i.e., printer, disk drive) 370, the "DoNodeDevicesSummary" routine is invoked. Each of these routines issues a set of command-line directives to the appropriate "behind-the-scenes" software tool, and loads the response data into a dialog box to be displayed on the screen. The actual command line entries are detailed in Appendix A and coded in microfiche Appendix B.

Referring to Fig. 16B, the "DoDetailsCharacteristics" routine produces dialog boxes containing characteristics information from the selected entities. First a variable i is initialized 380. Next, the routine checks 382 if entity number i is selected. If it is, the appropriate routine is called to create the characteristics information. In either case, the variable i is incremented 392, and the routine checks 394 if it is done (i.e., if it has checked all entities). If the routine is not done, it loops 382. If it is done, it ends.

If the entity is selected, its type is checked, and: if it is a node (i.e. VAX computer) 384, the "DoNodeCharacteristics" routine is invoked; if it is a terminal server 386, the "DoTSCharacteristics" routine is invoked; if it is a bridge 388, the "DoBridgeCharacteristics" routine is invoked; if it is a node component (i.e., printer, disk drive) 390, the "DoNodeDevicesSummary" routine is invoked (at this time, characteristics information is not available from node components so "Summary" is substituted transparently to the user). Each of these routines issues a set of command-line directives to the appropriate "behind-the-scenes" software tool, and loads the response data into a dialog box to be displayed on the screen. The actual command line entries are detailed in Appendix A.

Referring to Fig. 16C, the "DoDetailsCounters" routine produces dialog boxes containing counter information from the selected entities. First a variable i is initialized 400. Next, the routine checks 402 if entity number i is selected. If it is, the appropriate routine is called to create the counter information. In either case, the variable i is incremented 412, and the routine checks 414 if it is done (i.e., if it has checked all entities). If the routine is not done, it loops 402. If it is done, it ends.

If the entity is selected, its type is checked, and: if it is a node (i.e. VAX computer) 404, the "DoNodeCounters" routine is invoked; if it is a terminal server 406, the "DoTSCounters" routine is invoked; if it is a bridge 408, the "DoBridgeCounters" routine is invoked; if it is a node component (i.e., printer, disk drive) 410, the "DoNodeDevicesSummary" routine is invoked (at this time, counter information is not available from node components, although the summary is a summary of counter information in this case). Each of these routines issues a set of command-line directives to the appropriate "behind-the-scenes" software tool, and loads the response data into a dialog box to be displayed on the screen. The actual command line entries are detailed in Appendix A.

Referring to Fig. 16D, the "DoTestLoopback" routine performs a loopback test on selected entities. The number of entities must be one (in which case a loopback is performed from the user's host) or two (in which case a loopback is performed between the nodes). Therefore, the routine first checks 420 how many nodes are selected. This is done by DO loop that queries each node as to its selection state. Thereafter, the routine checks 422 if exactly one or exactly two nodes are selected. If not, an error dialog box is displayed 434.

Otherwise, the routine checks 424 if just one node is selected. If so, the routine checks 426 if it is a VAX computer; if it is, then the loopback is performed from the host by invoking the "DoLoopbackFromHost" routine 428. However, if the node is not a VAX computer, the error dialog box is displayed 434.

However, if two nodes are selected, the routine checks 430 if both selected nodes are VAX computers; if they are, then the loopback is performed between the selected nodes by invoking the "DoLoopbackBetweenNodes" routine 432. However, either node is not a VAX computer, the error dialog box is displayed 434.

The "DoLoopbackFromHost" and "DoLoopbackBetweenNodes" routines issue a set of command-line directives to the appropriate "behind-the-scenes" software tools, and check for response data indicating success. Success or failure responses are returned to the user in dialog boxes displayed on the screen. The actual command line entries produced by these routines are detailed in Appendix A.

In an implementation where the color hue, color brightness, and thickness of icons were representative of management information, such as the information described in Fig. 2G, a modified "UpdateEntities" routine would be performed. Also, a "DoLineCharacteristics" routine would be added, and used to update information from the entities, for example, the lines. The "DoLineCharacteristics" routine would be executed on-demand from the user, at start-up, or with a user-defined polling rate.

The records for each entity would store additional line-related data: Entities[i].LineCapacity, Entities[i].LineHealth, and Entities[i].LineTraffic. These values would be obtained by querying software tools that provided link information (such as the NMCC/DECnet Monitor, available from Digital Equipment Corporation, Maynard, MA).

Referring to Fig. 17, a DoLineCharacteristics" routine would first initialize 440 a counter. Next, an entity would be checked 442 to determine if it is a line entity. If not, the routine would not poll that entity for information and would skip to step 454. However, if the entity was a line entity, the appropriate software tool would be used 444, 446, 448, 450 to obtain any available information on the state of the line. This may be done by sending a command to one of the nodes which terminate the line; in this case the command sent to the tool would have a syntax such as:
NCP TELL <node name> SHOW LINE <name> CHARACTERISTICS
The data returned from the tool would be used to update 452 the appropriate entity's record. Next the counter would be incremented 454 and compared 456 to a maximum value. If the maximum value were exceeded, the routine would end. Otherwise, the loop would reiterate to step 442.

### Other Embodiments

Other embodiments are within the scope of the claims which follow the appendices.

In other embodiments, the invention can be part of a larger management software package. In this case, software tools which perform functions equivalent to (or in addition to) those discussed above would be coded and included in the complete package. The complete package would then have independent functionality, eliminating the need for a user to separately install software tools in the network.

Furthermore, in more complex embodiments the scale of the topology maps could be adjusted to suit the user's desires. In this way, the map could display the entire topology map or only a portion of it.

To allow the user to choose an area for display, the program would revert the scale to an illustration of the entire map, and a "ghost" rectangle (of a chosen size) could be moved by the pointing device to outline the desired area.

Also, the icons in a topology map which represent underlying topologies could include a small, low-resolution version of the underlying map. When the user "looked inside" of the icon, this lower-level map would expand in size until it covered a portion of the screen or the entire screen, at the user's discretion. In this way, multiple topology maps at different or the same level could be viewed simultaneously.

Furthermore, as an alternative to scroll bars on map windows, the map could be scrolled by a "hand" icon. The pointing device would then "push" the map around "under" the displayed window.

Also, color brightness, color hue and icon size may indicate management information different from that indicated in the above discussion.

This invention is not limited to managing only hardware or software entities. For example, the invention could query information from a human by, e.g., printing the query on an output device (e.g., computer screen), where the human would then provide information to the invention via an input device, e.g., keyboard or mouse. Additionally, the invention can control the human by printing step-by-step instructions on the output device; these instructions could direct the human to do tests (on the human himself or other entities) for the purpose of acquiring further information, and then receiving appropriate feedback as above.

### APPENDIX A: Review of Routines in Source Code

Following is a brief discussion of certain PASCAL procedures used in the source code.

### Menus1 and Menus2 Files (47 pages)

The code in these files relates directly to the actions performed in response to user menu commands. The procedures are arranged according to the related menu.

### APPLE menu related procedures

Standard desk accessories are made available in the Apple menu through the actions of initiation routines (stored in the initialization file). In addition, an About menu item is provided.

### Procedure DoAboutNetMap

Displays a dialog box containing copyright information relating to the program.

### TOPOLOGY menu related procedures

The topology menu provides the options of "New", "Choose Topology Layer", "Look Outside", "Look Inside", "Close", "Save", "Save As", and "Quit". "Quit" is handled in the ProcessMenu_in procedure by setting the finished flag (which will cause the program to terminate, see Fig. 13). The resources define the second menu as the "Topology" menu and the second item within that menu as "Choose Topology Layer", whereas the code names the second menu as a "File" menu, and the second item within that file menu as "Open". At execution time, the definition in the resources takes effect, and thus choosing the second item in the "Topology" menu will open a topology map file by prompting the user with a list of the available topologies (indicated by the file names).

### Procedure DoFileNew

Prepares a blank, new entity map.

### Procedure DoFileOpen

Prompts the user with a dialog box showing available entity map files, and allows the user to choose one.

### Procedure DoFileClose

Calls CloseAWindow to close a topology map window.

### Procedure DoTheActualOpen

Opens a chosen entity map file and loads the topology.

### Procedure DoFileLookOutside

Moves to an entity's parent topology (by opening the appropriate topology map file).

### Procedure DoFileLookInside

Moves to an entity's child topology (by opening the appropriate topology map file).

### Procedure CloseAWindow

Prompts the user to save a map's current changes, and then closes the map's window.

### Procedure DoFileSave

Saves the current topology to its current topology map file (writing to file is done by SaveMapToFile).

### Procedure DoFileSaveAs

Prompts the user for a file name in which to save the current topology, and then saves the topology map in the named file (writing to file is done by SaveMapToFile).

### Procedure SaveMapToFile

Saves the current topology map to a file.

### EDIT menu related procedures

The edit menu provides the options of "Undo", "Cut", "Copy", "Paste", and "Clear". The first four are provided for desk accessories--they are not used by the program. In another embodiment, they would be used to cut, copy and paste selected entities (and their associated information) within and between topology maps. "Clear" is used by the program--it is implemented by a call to RemoveSelectedEntities (in Utilities file).

### DEVICES menu related procedures

The devices menu provides the options of "Add Node", "Add Line", and "Get Info". "Add Node" initiates the adding of a node by setting the cursor to a node cursor, and setting the global DoAddNodeFlag (the node will be added wherever the mouse is clicked). "Add Line" initiates the adding of a line by setting the cursor to a line cursor, and setting the global DoAddLineFlag (the line will be added between the endpoints of a subsequent mouse drag). "Get Info" is performed by a separate procedure.

### Procedure DoDeviceGetInfo

Allows the user to view and modify the information for the selected entities (the actual display and modification is done by DoNodeInformation (in Goodies file).

### DETAILS menu related procedures

The details menu provides the options "Summary", "Characteristics", "Counters", "Show Comm. History", "Comm. Line Options", and "Describe Links". "Summary", "Counters", "Characteristics", and "Comm. Line Options" are implemented by routines listed below. "Show Comm. History" is not implemented by the source code; choosing this item displays a message box that describes the concept of the "Show Comm. History" command. Similarly, "Describe Links" creates a message box which explains how to interpret the sizing and color brightness of the icons representing communications links (see Fig. 2H and Figs. 11A through 11D).
Additionally, Figs. 11A through 11D illustrate the use of color hue to indicate the health of entities. However, the displayed color hue and color brightness are simply examples of how the concept would be utilized.

### Procedure DoDetailssummary

Issues a summary command to either a TS entity, a VAX computer entity, a Bridge entity, or a Node component (Terminal, LP, Tape, Disk, Remote Terminal, Communications component).

### Procedure DoNodeSummary

Issues a "NCP TELL <node> SHOW SUMMARY EXEC" command to the network. Displays the results in a dialog box.

### Procedure DoBridgeSummary

Loads RBMS and issues a "SHOW BRIDGE <name> SUMMARY" command to the network. Displays the results in a dialog box.

### Procedure DoNodeDevicesSummary

Issues a DCL "SHOW ERROR/FU" command to the server. Displays the results in a dialog box. In the embodiment of Appendix B, this only works for the server that the manager is logged into. However, it could be extended in similar fashion to apply to other entities.

### Procedure DoDetailsCharacteristics

Issues a characteristics command to either a TS entity, a VAX computer entity, or a Bridge entity. Characteristics commands to Node components (Terminals, LPs, Tapes, Disks, Remote Terminals, Communications components) are interpreted as summary commands, because a separate characteristics category is not supported by these components.

### Procedure DoTSCharacteristics

Loads NCP and connects to a terminal server and issues a "SHOW SERVER CHARACTERISTICS" command. Displays the results in a dialog box.

### Procedure DoBridgeCharacteristics

Loads RBMS and issues a "SHOW BRIDGE <name> CHARACTERISTICS" command. Displays the results in a dialog box.

### Procedure DoNodeCharacteristics

Issues a "NCP TELL <node> SHOW CHARACTERISTICS EXEC" command. Displays the results in a dialog box.

### Procedure DoDetailsCounters

Issues a counters command to either a TS entity, a VAX computer entity, or a Bridge entity. Counters commands to Node components (Terminals, LPs, Tapes, Disks, Remote Terminals, Communications components) are interpreted as summary commands, because a separate counters category is not supported by these components.

### Procedure DoNodeCounters

Issues a "NCP TELL <node> SHOW EXEC COUNTERS" command. Displays the results in a dialog box.

### Procedure DoBridgeCounters

Loads RBMS and issues a "SHOW BRIDGE <name> COUNTERS" command. Displays the results in a dialog box.

### Procedure DoTSCounters

Loads NCP, connects to the selected terminal server, and issues a "SHOW SERVER COUNTERS" command. Displays the results in a dialog box.

### Function PopulateTSDialog

Is used by the above procedures to read (e.g., from the serial port) text returned from a terminal server, and fills a dialog box.

### Procedure PopulateNCPDialog

Is used by the above procedures to read (e.g., from the serial port) NCP response data, and populates a dialog box.

### Procedure PopulateNodeDevicesDialog

Is used by the above procedures to read (e.g, from the serial port) response data from a node component (Terminal, LP, Tape, Disk, Remote Term, Communications component), and populates a dialog box.

### Procedure PopulateBridgeDialog

Is used by other procedures to read, e.g. from the serial port, response data from a bridge via RBMS and populate a dialog box.

### Function PopulateGenericDialog

Is also used by the above procedures to read (e.g., from the serial port) response data, and to populate a dialog box.

### Procedure DoDetailsCommOptions

Creates a dialog box that allows the user to choose the baud rate of the communications with the server.

### TEST menu related procedures

The test menu allows the user to invoke "loopback" tests. Only DECnet Mirror Loopbacks are implemented by the source code. Other embodiments could implement further classes of tests (e.g., Device Loopbacks and Modem Loopbacks).

### Procedure DoTestLoopback

Checks the number of selected nodes. If one is selected, does a loop to that node from the host (using DoLoopbackFromHost). If two are selected, does a loop between those selected (using DoLoopbackBetweenNodes).

### Procedure DoLoopbackFromHost

Issues a NCP LOOP NODE <node>" command, and passes control to CheckLoopback.

### Procedure DoLoopbackBetweenNodes

Issues a "NCP TELL <nodel> LOOP NODE <node2>" command, and passes control to CheckLoopback

### Procedure CheckLoopback

Verifies the results of a loop, and returns a dialog box with the results to the user.

### HELP menu related procedures

### Procedure DoHelpHelp

This procedure provides user help by accessing the help text compiled by the publicly available Help Compiler Version 2.0, available from Bob Monsen, available through CompuServe Information Systems at address 71001,2610 or through ARPAnet at address rmonsen@bbn.com.

### Lines File (4 pages)

When the program is in "Add Line" mode (i.e., the cursor is set to the add line cursor, and the DoAddLine flag is set), a mouse down (processed by the DealwthMouseDowns procedure, see Goodies file and Fig. 14D) will initiate the creation of a line by calling the DoAddLine procedure.

### Procedure DoAddLine

Notes the location of the mouse, draws "ghost" lines as the mouse is "dragged" around the screen, and then draws a line between the starting and ending points of the drag.

### Modem File (7 pages)

This file contains general low-level routines for controlling a Macintosh serial interface (or to an emulated serial interface provided by operating system re-direction) to provide communications with the network.

### Procedure CharsToModem

Sends a string to the serial interface.

### Function InitModem

Initializes the serial interface. If successful, the function's result is the string "noErr". Otherwise, a string indicating the error is returned.

### Procedure DisposeModem

Closes the RAM serial driver for the serial interface.

### Function LineFromModem

Returns a line of text returned from the serial interface. It makes use of RemainderText, a global semaphore; RemainderText is set to the string "*#Timeout#*" if the remainder of the text is unavailable because the server has timed-out. A call to this function specifies the maximum time that the function will wait before it gives up.

### Utilities File (6 pages)

This file contains general low-level routines for interacting with the operating system 115 (Fig. ).

### Procedure InvalContentArea

Invalidates the contents (and not the scroll bars) of a window.

### Procedure DisableEditMenuItems

Disables items from the Edit Menu.

### Procedure EnableEditMenuItems

Enables items from the Edit Menu.

### Procedure RemoveSelectedEntities

Removes selected entities from the display by iterative calls to RemoveEntity.

### Procedure RemoveEntity

Removes an entity from the display.

### Function CenterPtOfRect

Determines the center point of a rectangle.

### Procedure CreateRgnAroundLine

### Procedure CreateRgnAroundNode

Set up the regions around line or node entities--used to determine when a line or node is selected.

### Procedure ZoomRect

Zooms the contents of a source rectangle to a destination rectangle, taking a specified number of steps during the zoom.

### Function RemoveMultSpaces

Removes multiple spaces from a string.

### Initialization File (6 pages)

The procedures in this file are called during the initialization of the program (see Fig. 12).

### Procedure InitThings

Creates a grafport for the program; displays the "watch" cursor, starts up the Macintosh toolbox managers for fonts, windows, menus, text editing, and dialog boxes; and flushes the event queues; sets up default entity types and initializes records.

### Procedure SetupThings

Calls the setup procedures below, and then displays the "arrow" cursor.

### Procedure SetupLimits

Defines the size of the screen.

### Procedure SetupMenus

Sets up the program's menus.

### Procedure SetupWindows

Sets up the program's windows.

### Goodies File (36 pages)

### Procedure MainEventLoop

The main event loop (see Fig. 13).

### Procedure DealwthUpdates

Called by the main event loop to process update events. Updates the appropriate window (see Fig. 14C)

### Procedure DealwthActivates

Called by the main event loop to process activate events. Sets the port to the appropriate window (see Fig. 14A).

### Procedure DealwthKeyDowns

Called by the main event loop to process key stroke events. Converts the key stroke to a character and determines if a menu choice has been made (see Fig. 14B).

### Procedure DealwtbMouseDowns

Called by the main event loop to process mouse down events. Determines the location of the mouse down and performs the appropriate actions (see Fig. 14D).

### Procedure ProcessMenu_in

Called by DealwthKeyDowns or DealwthMouseDowns to process menu choices and call the appropriate menu routines (see Menu 1 and Menu 2 files, and Fig. 15).

### Procedure InNodeAction

Creates the "ghost" nodes while a node is being moved.

### Procedure DownInNodeEntity

Produces the appropriate actions when a mouse down occurs on a node icon.

### Procedure DownInLineEntity

Produces the appropriate actions when a mouse down occurs on a line icon.

### Procedure ScrolltheRectHorizontally

Used to scroll the topology map (or other windows with scroll bars) horizontally.

### Procedure ScrolltheRectVertically

Used to scroll the topology map (or other windows with scroll bars) vertically.

### Procedure DoInSomeControl

### Procedure TrackControlAction

### Procedure TrackTheControl

Determine the control in which an action occurs and invoke the appropriate procedure.

### Procedure DoInContent

Determines the location in a windows content where a mouse down occurred and invokes the appropriate actions.

### Procedure UpdateEntities

Updates the screen in response to update events.

### Procedure DoNodeInformation

Prompts the user with a dialog box containing the information stored for the selected entity. Allows the user to modify this information.

### Procedure DoAddNode

When the program is in "Add Node" mode (i.e., the cursor is set to the node cursor, and the DoAddNode flag is set), a mouse down (processed by the DealwthMouseDowns procedure, see Goodies file and Fig. 3B) will create a node by calling the DoAddNode procedure.

### Procedure Update_Scroll_Bar_Areas

Updates the scroll bars during a window scroll.

### Procedure RePositionScrollBars

Re-locates the scroll bars when a window has been resized.

### Procedure ReSizeWindow

Used to re-size a window (when a mouse drag occurs on the window's grow region).

### Procedure DoTheActualUpdate

Causes the window's contents to be updated (called after a change has been made and a portion of the window has been invalidated).

### Procedure GetRidOfNumeEdit

Used to finish a session of the Macintosh "textedit" toolbox routine, and thus complete text editing.

### Procedure DeselectAllEntities

Used to de-select all entities, for example when the user clicks on a blank space in the map.

### Function FigureNameRect

Used to create the rectangles that contain icon names.

### PseudoUpdateEntities File (3 pages)

This file illustrates how the UpdateEntities routine (in the Goodies file) might be modified to make use of line data gathered by a DoLineCharacteristics routine such as illustrated in Fig. 17. In brief summary, the modified UpdateEntities routine would check if each entity were a line entity. If it were, the routine would use the collected information to modify the thickness, color brightness, or color hue of the icons depicting the communications link entity.

### Resources File (41 pages)

This file defines most of the icons, windows, cursors, menus, controls, help routines, colors, and dialog box contents used by the invention during execution.

### Help Text File (7 pages)

This file defines the help text that is available from the help menu (Figs. llA through llD). The text is compiled by the Macintosh help compiler discussed above to produce the help message boxes and list box.

### NetMap Globals File (5 pages)

Contains global variables, constants, declarations, and record structures used by routines in the other files.

### NetMap Main File (1 page)

Calls other routines to initialize the environment and program, begin normal execution, and perform final clean-up at program termination.

## Claims

1. In a computer network comprising entities, a method of performing entity management operations by selected commands to the entities which are comprised of computers, servers, peripheral devices, hardware, and software, and are organized hierarchically, some of the entities being connected to be responsive to a directive to participate in the management of one or more of the other entities, said method comprising the computer-implemented steps of;
displaying icons representing said entities;
providing a pointing device allowing a user to point to displayed icons;
selecting an entity when said user points to an icon representing said entity; and
permitting said user to indicate an intended entity management operation to be performed by entities which are selected, wherein
when more than one entity is selected, and one entity performs said intended entity management operation, said intended entity management operation is performed by each entity which is selected.

2. The method of claim 1 further comprising the computer-implemented steps of:
displaying entity management operations which can be performed by at least one of said entities in a menu; and
permitting a user to choose an entity management operation from said menu by pointing to said entity management operation, wherein:
while a given entity is selected, said user is prevented from choosing entity management operations in said menu which cannot be performed by said given entity.

3. The method of claim 1, wherein said commands include a summary command, a characteristics command, a counters command, and a test command, said commands being translated into directives for delivery to one or more of said entities to achieve an entity management operation, at least one said command being translated into a first directive while a first entity is selected and being translated into a second different directive while a second entity is selected.

4. The method of claim 3, wherein while a node component named <name> is selected,
said summary command is translated to an associated NCP directive
TELL <name> SHOW SUMMARY EXEC ;
said characteristics command is translated to an associated NCP directive
TELL <name> SHOW CHARACTERISTICS EXEC ; and
said counters command is translated to an associated NCP directive
TELL <name> SHOW EXEC COUNTERS.

5. The method of claim 4, wherein while a bridge component named <name> is selected:
said summary command is translated to an associated RBMS directive
SHOW BRIDGE <name> SUMMARY ;
said characteristics command is translated to an associated RBMS directive
SHOW BRIDGE <name> CHARACTERISTICS ; and
said counters command is translated to an associated RBMS directive
SHOW BRIDGE <name> COUNTERS.

6. The method of claim 4, wherein while a terminal server component named <name> is selected:
said characteristics command is translated to an associated NCP directive
CONNECT NODE <name>
SHOW SERVER CHARACTERISTICS ; and
said counters command is translated to an associated NCP directives
CONNECT NODE <name>
SHOW SERVER COUNTERS.

7. The method of claim 4 wherein,
while a single node component named <name> is selected, said test command is translated to an associated NCP directive "LOOP NODE <name>"; and
while two node components named <name1> and <name2> are selected, said test command is translated to an associated NCP directive "TELL NODE <name1> LOOP NODE <name2>".

## Patentansprüche

1. Verfahren zum Ausführen von Entitätenmanagementoperationen in einem Computernetz, das Entitäten bwz. Sachen enthält, durch ausgewählte Befehle an die Entitäten, die Computer, Server, Peripheriegeräte, Hardware und Software umfassen und hierarchisch organisiert sind, wobei einige der Entitäten so angeschlossen sind, daß sie auf eine Anweisung ansprechen, um am Management eines oder mehrerer der anderen Entitäten teilzunehmen, wobei das Verfahren die folgenden computer-implementierten Schritte enthält:
Anzeigen von Piktogrammen, die die Entitäten repräsentieren;
Vorsehen einer Zeigevorrichtung, die einem Anwender ermöglicht, auf angezeigte Piktogramme zu zeigen;
Auswählen einer Entität, wenn der Anwender auf ein die Entität repräsentierendes Piktogramm zeigt; und
Ermöglichen, daß der Anwender eine beabsichtigte Entitätenmanagementoperation angeben kann, die von den gewählten Entitäten ausgeführt werden soll, wobei
dann, wenn mehr als eine Entität ausgewählt ist und eine Entität die beabsichtigte Entitätenmanagementoparation ausführt, die beabsichtigte Entitätenmanagementoperation von jeder ausgewählten Entität ausgeführt wird.

2. Verfahren nach Anspruch 1, das weiterhin die folgenden computer-implementierten Schritte aufweist:
Anzeigen von Entitätenmanagementoperationen, die durch wenigstens eine der Entitäten ausgeführt werden können, in einem Menü; und
Ermöglichen, daß ein Anwender eine Entitätenmanagementoperation aus dem Menü auswählen kann, indem er auf die Entitätenmanagementoperation zeigt, wobei:
dann, wenn eine gegebene Entität ausgewählt ist, der Anwender keine Entitätenmanagementoperationen aus dem Menü auswählen kann, die von der gegebenen Entität nicht ausgeführt werden können.

3. Verfahren nach Anspruch 1, bei dem die Befehle einen Zusammenfassungs-Befehl, einen Eigenschaften-Befehl, einen Zähler-Befehl und einen Test-Befehl umfassen, wobei die Befehle in Anweisungen übersetzt werden, die an eine oder mehrere der Entitäten geliefert werden, um die Entitätenmanagementoperation auszuführen, wobei wenigstens einer der Befehle in eine erste Anweisung übersetzt wird, wenn eine erste Entität ausgewählt ist, und in eine zweite, verschiedene Anweisung übersetzt wird, wenn eine zweite Entität ausgewählt ist.

4. Verfahren nach Anspruch 3, bei dem dann, wenn eine <name> genannte Knotenkomponente gewählt ist,
der Zusammenfassungs-Befehl in eine zugeordnete NCP-Anweisung
TELL <name> SHOW SUMMARY EXEC übersetzt wird;
der Eigenschaften-Befehl in eine zugeordnete NCP-Anweisung
TELL <name> SHOW CHARACTERISTICS EXEC übersetzt wird; und
der Zähler-Befehl in eine zugeordnete NCP-Anweisung
TELL <name> SHOW EXEC COUNTERS übersetzt wird.

5. Verfahren nach Anspruch 4, bei dem dann, wenn eine <name> genannte Brückenkomponente ausgewählt ist,
der Zusammenfassungs-Befehl in eine zugeordnete RBMS-Anweisung
SHOW BRIDGE <name> SUMMARY übersetzt wird;
der Eigenschaften-Befehl in eine zugeordnete RBMS-Anweisung
SHOW BRIDGE <name> CHARACTERISTICS übersetzt wird; und
der Zähler-Befehl in eine zugeordnete RBMS-Anweisung
SHOW BRIDGE <name> COUNTERS übersetzt wird.

6. Verfahren nach Anspruch 4, bei dem dann, wenn eine <name> genannte Terminal-Serverkomponente ausgewählt ist,
der Eigenschaften-Befehl in eine zugeordnete NCP-Anweisung
CONNECT NODE <name> SHOW SERVER CHARACTERISTICS übersetzt wird; und
der Zähler-Befehl in eine zugeordnete NCP-Anweisung
CONNECT NODE <name> SHOW SERVER COUNTERS übersetzt wird.

7. Verfahren nach Anspruch 4, bei dem
dann, wenn eine <name> genannte einzelne Knotenkomponente ausgewählt ist, der Test-Befehl in eine zugeordnete NCP-Anweisung "LOOP NODE <name>" übersetzt wird; und
dann, wenn zwei <name1> bzw. <name2> genannte Knotenkomponenten ausgewählt sind, der Test-Befehl in eine zugeordnete NCP-Anweisung "TELL NODE <namel> LOOP NODE <name2>" übersetzt wird.

## Revendications

1. Dans un réseau informatique comprenant des entités, un procédé pour effectuer des opérations de gestion d'entité à l'aide de commandes sélectionnées à destination des entités qui comprennent des ordinateurs, des serveurs, des périphériques, du matériel et des logiciels, et qui sont organisées de façon hiérarchique, certaines entités étant connectées pour répondre à une instruction pour participer à la gestion d'une ou de plusieurs des autres entités, ledit procédé comprenant les étapes mises en oeuvre par voie informatique consistant à :
afficher des icônes représentant lesdites entités;
prévoir un dispositif de pointage permettant à un utilisateur de pointer des icônes affichées;
sélectionner une entité quand ledit utilisateur pointe une icône représentant ladite entité; et
permettre audit utilisateur d'indiquer une opération de gestion d'entité prévue à effectuer par les entités sélectionnées, dans lequel
quand plus d'une entité est sélectionnée, et une entité effectue ladite opération de gestion d'entité prévue, ladite opération de gestion d'entité prévue est effectuée par chaque entité sélectionnée.

2. Procédé selon la revendication 1, comprenant en outre les étapes mises en oeuvre par voie informatique consistant à :
afficher des opérations de gestion d'entité qui peuvent être effectuées par au moins une desdites entités dans un menu; et
permettre à un utilisateur de choisir une opération de gestion d'entité à partir dudit menu en pointant ladite opération de gestion d'entité, dans lequel :
tant qu'une entrée donnée est sélectionnée, on empêche ledit utilisateur de choisir des opérations de gestion d'entité dans ledit menu qui ne peuvent pas être effectuées par ladite entité.

3. Procédé selon la revendication 1, dans lequel lesdites commandes incluent une commande de résumé, une commande de caractéristiques, une commande de compteurs, et une commande de test, lesdites commandes étant traduites en instructions pour être fournies à l'une ou plusieurs desdites entités pour réaliser une opération de gestion d'entité, au moins l'une desdites commandes étant traduite en une première instruction tandis qu'une première entité est sélectionnée et étant traduite en une deuxième instruction différente tandis qu'une deuxième entité est sélectionnée.

4. Procédé selon la revendication 3, dans lequel tandis qu'un composant nodal appelé <name> est sélectionné,
ladite commande de résumé est traduite en une instruction NCP associée
TELL <name> SHOW SUMMARY EXEC;
ladite commande de caractéristiques est traduite en une instruction NCP associée
TELL <name> SHOW CHARACTERISTICS EXEC; et
ladite commande de compteurs est traduite en une instruction NCP associée
TELL <name> SHOW EXEC COUNTERS.

5. Procédé selon la revendication 4, dans lequel un composant passerelle appelé <name> est sélectionné :
ladite commande de résumé est traduite en une instruction RBMS associée
SHOW BRIDGE <name> SUMMARY;
ladite commande de caractéristiques est traduite en une instruction RBMS associée
SHOW BRIDGE <name> CHARACTERISTICS; et
ladite commande de compteurs est traduite en une instruction RBMS associée
SHOW BRIDGE <name> COUNTERS.

6. Procédé selon la revendication 4, dans lequel un composant de serveur de connexion appelé <name> est sélectionné :
ladite commande de caractéristiques est traduite en une instruction NCP associée
CONNECT NODE <name>
SHOW SERVER CHARACTERISTICS; et
ladite commande de compteurs est traduite en une instruction NCP associée
CONNECT NODE <name>
SHOW SERVER COUNTERS.

7. Procédé selon la revendication 4, dans lequel,
tandis qu'un seul composant nodal appelé <name> est sélectionné, ladite commande de test est traduite en une instruction NCP associée "LOOP NODE <name>"; et
tandis que deux composants nodaux appelés <name1> et <name2> sont sélectionnés, ladite commande de test est traduite en une instruction associée NCP "TELL NODE <name1> LOOP NODE <name2>".
